# EUROPEAN PATENT SPECIFICATION

(11) **EP 4 151 330 B1**
(45) Date of publication and mention of the grant of the patent: **18.11.2026**
(21) Application number: 21838678.7
(22) Date of filing: 04.06.2021
(51) Int. Cl.: B21D 5/01, B21D 39/20, G05B 23/02, B23K 9/025, G06N 20/00

(54) **STEEL PIPE ROUNDNESS PREDICTION METHOD, STEEL PIPE ROUNDNESS CONTROL METHOD, STEEL PIPE PRODUCTION METHOD, METHOD FOR GENERATING STEEL PIPE ROUNDNESS PREDICTION MODEL, AND STEEL PIPE ROUNDNESS PREDICTION DEVICE**
VERFAHREN ZUR VORHERSAGE DER RUNDHEIT VON STAHLROHREN, VERFAHREN ZUR HERSTELLUNG VON STAHLROHREN, VERFAHREN ZUR MODELLVORHERSAGE UND VORRICHTUNG ZUR VORHERSAGE DER RUNDHEIT VON STAHLROHREN
PROCÉDÉ DE PRÉDICTION DE RONDEUR DE TUYAU D'ACIER, PROCÉDÉ DE COMMANDE DE RONDEUR DE TUYAU D'ACIER, PROCÉDÉ DE PRODUCTION DE TUYAU D'ACIER, PROCÉDÉ DE GÉNÉRATION DE MODÈLE DE PRÉDICTION DE RONDEUR DE TUYAU D'ACIER ET DISPOSITIF DE PRÉDICTION DE RONDEUR DE TUYAU D'ACIER

(30) Priority: 10.07.2020 JP 2020118875
(43) Date of publication of application: 22.03.2023
(73) Proprietor: JFE Steel Corporation, Tokyo 100-0011 (JP)
(72) Inventor: HINATA, Kosuke, Tokyo 100-0011 (JP); HORIE, Masayuki, Tokyo 100-0011 (JP); TAKASHIMA, Yukio, Tokyo 100-0011 (JP)
(74) Representative: Grünecker Patent- und Rechtsanwälte PartG mbB
(86) International application number: PCT/JP2021/021416
(87) International publication number: WO 2022/009576

(56) References cited:
- JP-B1- 6 519 896
- JP-B2- 4 870 200
- US-A1- 2019 094 843
- KLANCNIK SIMON: "Prediction of technological parameters of sheet metal bending in two stages using feed forward neural network", TEHNICKI VJESNIK, vol. 23, no. 4, 1 August 2016 (2016-08-01), HR, XP093086024, ISSN: 1330-3651, DOI: 10.17559/TV-20141201225004
- ZHANG ZIQIAN ED - SLAVIC JANKO ET AL: "Modeling and simulation for cross-sectional ovalization of thin-walled tubes in continuous rotary straightening process", INTERNATIONAL JOURNAL OF MECHANICAL SCIENCES, vol. 153, 15 January 2019 (2019-01-15), pages 83 - 102, XP085622695, ISSN: 0020-7403, DOI: 10.1016/J.IJMECSCI.2019.01.021
- XU WANG ET AL: "Applications of Finite Element Method in Large-Diameter Longitudinal Welded Pipe", MEASURING TECHNOLOGY AND MECHATRONICS AUTOMATION, 2009. ICMTMA '09. INTERNATIONAL CONFERENCE ON, IEEE, PISCATAWAY, NJ, USA, 11 April 2009 (2009-04-11), pages 22 - 25, XP031511381, ISBN: 978-0-7695-3583-8
- REN, QIANG: "Numerical study on the X80 UOE pipe forming process", JOURNAL OF MATERIAL PROCESSING TECHNOLOGY, vol. 215, 2015, pages 264 - 277, XP029064198, DOI: 10.1016/j.jmatprotec.2014.08.013

## Description

### Field

The present invention relates to a steel pipe out-of-roundness control method, a steel pipe manufacturing method and a steel pipe out-of-roundness prediction device.

### Background

Techniques of manufacturing a steel pipe having a large diameter and a large thickness used for a line pipe and the like include a wide-spread technique of manufacturing a steel pipe (referred to as UOE steel pipe) obtained by press working on a steel sheet having a predetermined length, width, and thickness into a U shape, press forming the sheet into an O shape and welding a butt portion to form the sheet into a steel pipe, and expanding the diameter of the steel pipe (referred to as pipe expansion) to improve out-of-roundness. However, the manufacturing step of the UOE steel pipe requires a large pressing pressure in the step of performing press working on the steel sheet to be formed into a U shape and an O shape, making it necessary to use a large-scale press machine.

To manage this issue, there is a proposed technique in manufacturing a steel pipe having a large diameter and a large thickness, which is a technique of press forming with reduced pressing pressure.
Specifically, the technique that has been put into practical use is a technique in which, after bending is applied to the end of a steel sheet in the width direction (referred to as end bending), a press bending step of performing a 3-point bending press a plurality of times by punching is conducted to produce a formed body having a U-shaped cross section (hereinafter, referred to as a U-shaped formed body), a seam gap reduction step of reducing a seam gap portion of the formed body having a U-shaped cross section is conducted to form the pipe into an open pipe, butt portions are welded to form a steel pipe, and finally a pipe expanding device is inserted into the steel pipe to expand an inner diameter of the steel pipe. The pipe expanding device used is a device which includes a plurality of pipe expanding tools each having a curved surface obtained by dividing an arc into a plurality of portions and brings the curved surface of the pipe expanding tool into contact with the inner surface of the steel pipe so as to expand the steel pipe and fix the shape of the steel pipe.

In the press bending step, increasing the number of times of the 3-point bending press improves the out-of-roundness of the steel pipe after the pipe expanding step, although it takes a long time to form the steel pipe to have a U-shaped cross section. On the other hand, reducing the number of times of the 3-point bending press would result in a problem that the cross-section of the steel pipe takes a substantially polygonal shape, making it difficult to form a circular cross-sectional shape. To handle this, the number of times of 3-point bending press (for example, 5 to 13 times in a steel pipe having a diameter of 1200 mm) is empirically determined in operation depending on the dimensions of the steel pipe. Regarding the operational conditions of the press bending step for improving the out-of-roundness of the steel pipe after the pipe expanding step, many proposals have been made regarding the setting method thereof.

For example, Patent Literature 1 describes a method for performing 3-point bending press as few times as possible and a method of expanding a pipe by bringing a plurality of pipe expanding tools disposed in a circumferential direction of a pipe expanding device into contact with a non-deformed portion, which is not deformed by the 3-point bending press.

Patent Literature 2 describes a method of improving the out-of-roundness of the steel pipe after the pipe expanding step by setting the curvature radius of the outer circumferential surface of the punch used in the 3-point bending press and the curvature radius of the outer peripheral surface of the pipe expanding tool satisfy a predetermined relational expression.

Patent Literature 3 discloses a method having the features of the preamble of claim 1. It describes a method, as a manufacturing method capable of efficiently manufacturing a steel pipe having satisfactory out-of-roundness without requiring an excessive pressing force in the press bending step, in which there is provided, in execution of 3-point bending press, a light-worked portion having an extremely small curvature compared to other regions, or an unworked portion in which bending processing is omitted, in at least a part of a steel sheet. Patent Literature 3 also describes an operation, in the seam gap reduction step, which is application of a pressing force to a portion separated by a predetermined distance from the center of the light-worked portion or the unworked portion without restraining the light-worked portion or the unworked portion. Incidentally, an O-press device is typically used in the seam gap reduction step performed after the press bending step.

In this regard, Patent Literature 4 describes another method of reducing the seam gap (hereinafter, referred to as a "closing press method") in which, after a non-circular preform (formed body with U-shaped cross section) is formed by a 3-point bending press, and then, instead of a normal O-press step, a pushing force is applied from the outside of the non-circular preform by a pushing tool disposed on an upper portion so as to face a lower support roll while supporting the non-circular preform by two lower support rolls, thereby reducing the seam gap. This method is characterized in that applying pushing force by using a pushing tool from the outside of the non-circular preform can simplify the device configuration, eliminating the necessity to prepare a die according to the outer diameter of the steel pipe as in the O-press device. Patent Literature 4 also describes a method of intentionally providing a relatively slightly formed region in a part at the 3-point bending press and applying a pushing force to the region in a formed body having a U-shaped cross section, in a closing press method used in the seam gap reduction step.

Non Patent Literature 1 discloses a sheet metal bending in two stages and predicting and testing of the final bend angle by means of a feed-forward neural network.

Non Patent Literature 2 discloses a thin-walled steel pipe out-of-roundness prediction method for predicting an out-of-roundness of a thin-walled steel pipe after the initial large bending stage in tube's continuous rotary straightening process.

Non Patent Literature 3 discloses a finite element analysis carried out on steel pipe manufactured by UOE-process. The finite element analysis simulates the forming process and predicts the processing parameters.

### Citation List

### Patent Literature and Non Patent Literature

Patent Literature 1: JP 2012-170977 A
Patent Literature 2: JP 5541432 B1
Patent Literature 3: JP 6015997 B1
Patent Literature 4: JP 2012-250285 A
Non Patent Literature 1: Clancnik, Simon et al: "Prediction of technological parameters of sheet metal bending in two stages using feed forwards neural network", Tehnicki Vjeshnik, vol. 23, no. 4, August 1, 2016
Non Patent Literature 2: Zhang, Ziqian et al: "Modeling and simulation for cross-sectional ovalization of thin-walled tubes in continuous rotary straightening process", International Journal of Mechanical Sciences, vol. 153, pages 83-102, 2019
Non Patent Literature 3: Xu Wang et al: "Applications of Finite Element Method in Large-Diameter Longitudinal Welded Pipe", Measuring Technology and Mechatronics Automation, pages 22-25, April 11, 2009 Summary

### Technical Problem

The method described in Patent Literature 1 is a method of improving the out-of-roundness of the steel pipe after the pipe expanding step by associating the pressing position of the 3-point bending press with the pressing position of the pipe expanding tool. However, the steel pipe manufacturing step includes a plurality of steps including at least a press bending step, a seam gap reduction step, a welding step, and a pipe expanding step. Therefore, the method described in Patent Literature 1 does not consider the influence of the operational conditions in other steps on the out-of-roundness of the steel pipe after the pipe expanding step, making it difficult to always ensure improvement of the out-of-roundness of the steel pipe after the pipe expanding step.

Similarly to the method described in Patent Literature 1, the method described in Patent Literature 2 is a method in which the curvature radius is set such that the curvature radius of the outer circumferential surface of the punch used in the 3-point bending press as the operational condition of the press bending step and the curvature radius of the outer circumferential surface of the pipe expanding tool as the operational condition of the pipe expanding step satisfy a predetermined relational expression, thereby improving the out-of-roundness of the steel pipe after the pipe expanding step. However, in the method described in Patent Literature 2, similarly to the method described in Patent Literature 1, there is a problem of incapability of considering the influence of steps other than the press bending step, such as the seam gap reduction step.

The method described in Patent Literature 3 is a method of improving the out-of-roundness of the steel pipe after the pipe expanding step by changing the working condition of the 3-point bending press in the press bending step depending on the position of the steel sheet and setting the working condition to a condition associated with the forming condition in the seam gap reduction step. However, the method described in Patent Literature 3 has a problem that presence of variations in the sheet thickness or the material of the steel sheet as a material leads to variations in the out-of-roundness of the steel pipe after the pipe expanding step varies even under the same forming condition.

The method described in Patent Literature 4 is also a method of improving the out-of-roundness of the steel pipe after the pipe expanding step by setting a conditions such that the forming condition of the U-shaped cross section into the formed body in the press bending step and the forming condition in the seam gap reduction step are associated with each other. However, in the method described in Patent Literature 4, there is also a problem that occurrence of variation in the sheet thickness or the material of the steel sheet as a material leads to a problem of variation in the out-of-roundness of the steel pipe after the pipe expanding step even under the same forming condition.

The present invention has been made to solve the above problems, and its object is to provide a steel pipe out-of-roundness prediction device capable of accurately predicting the out-of-roundness of a steel pipe after a pipe expanding step in a steel pipe manufacturing step including a plurality of steps. Another object of the present invention is to provide a steel pipe out-of-roundness control method capable of accurately controlling the out-of-roundness of the steel pipe after the pipe expanding step in the steel pipe manufacturing step including a plurality of steps. Another object of the present invention is to provide a steel pipe manufacturing method capable of manufacturing a steel pipe having a desired out-of-roundness with good yield.

### Solution to Problem

The invention is as defined in the independent claims. Preferred embodiments thereof are specified in the dependent claims.

### Advantageous Effects of Invention

According to the steel pipe out-of-roundness prediction device of the present invention, it is possible to accurately predict the out-of-roundness of the steel pipe after the pipe expanding step in the steel pipe manufacturing step including a plurality of steps. In addition, according to a steel pipe out-of-roundness control method according to the present invention, it is possible to accurately control the out-of-roundness of the steel pipe after the pipe expanding step in the steel pipe manufacturing step including a plurality of steps. Furthermore, according to the steel pipe manufacturing method according to the present invention, it is possible to manufacture a steel pipe having desired out-of-roundness with good yield.

### Brief Description of Drawings

FIG. 1 is a diagram illustrating a steel pipe manufacturing step according to an embodiment of the present invention.
FIG. 2 is a diagram illustrating an example of a step of forming a formed body having a U-shaped cross section using a press bending device.
FIG. 3 is a diagram illustrating an example of a step of forming a formed body having a U-shaped cross section using a press bending device.
FIG. 4 is a diagram illustrating a configuration example of an O-press device.
FIG. 5 is a diagram illustrating a configuration example of a closing press device.
FIG. 6 is a diagram illustrating a configuration example of a pipe expanding device.
FIG. 7 is a diagram illustrating a configuration example of a measuring device of an outer diameter shape of a steel pipe.
FIG. 8 is a diagram illustrating an out-of-roundness prediction model generation method according to an embodiment of the present invention.
FIG. 9 is a diagram illustrating an example of a change in a relationship between a press working amount and out-of-roundness of a steel pipe after a pipe expanding step according to a change in the operational condition of the press bending step.
FIG. 10 is a diagram illustrating an example of a press depression position and a press depression amount for each number of times of pressing.
FIG. 11 is a diagram illustrating a flow of an out-of-roundness control method according to an embodiment of the side of the reconfiguration target step, based on the predicted steel pipe out-of-roundness information.

A steel pipe manufacturing method according to the present invention includes a step of manufacturing a steel pipe using the steel pipe out-of-roundness control method according to the present invention.

A steel pipe out-of-roundness prediction model generation method according to the present invention generates an out-of-roundness prediction model that predicts an out-of-roundness of a steel pipe after a pipe expanding step of expanding an inner diameter of the steel pipe having ends joined to each other in a steel pipe manufacturing process including: a press bending step of processing a steel sheet into a formed body having a U-shaped cross section by a plurality of times of pressing by a punch; a seam gap reduction step of reducing a seam gap portion of the formed body having a U-shaped cross section to form an open pipe; a welding step of joining ends of the open pipe to each other; and the pipe expanding step, and includes: a step of acquiring a plurality of pieces of training data having one or more pieces of actual data selected from attribute information of the steel sheet, one or more pieces of actual data selected from operational actual data of the press bending step, and one or more pieces of actual data selected from operational actual data of the seam gap reduction step, as input actual data, and having actual data of the out-of-roundness of the steel pipe after the pipe expanding step in the manufacturing step of the steel pipe using the input actual data, as output actual data, and generating an out-of-roundness prediction model by machine learning using the plurality of pieces of training data acquired.

The machine learning to be used may be a type of machine learning selected from a neural network, decision tree learning, random forest, and support vector regression.

A steel pipe out-of-roundness prediction device according to the present invention predicts an out-of-roundness of a steel pipe after a pipe expanding step of expanding an inner diameter of the steel pipe having ends joined to each other in a steel pipe manufacturing process including: a press bending step of processing a steel sheet into a formed body having a U-shaped cross section by a plurality of times of pressing by a punch; a seam gap reduction step of reducing a seam gap portion of the formed body having a U-shaped cross section to form an open pipe; a welding step of joining ends of the open pipe to each other; and the pipe expanding step, and includes: an operational parameter acquisition unit that acquires one or more parameters selected from attribute information of the steel sheet, one or more operational parameters selected from operational parameters of the press bending step, and one or more operational parameters selected from operational parameters of the seam gap reduction step; and an out-of-roundness prediction unit that predicts steel pipe out-of-roundness information after the pipe expanding step by inputting the operational parameter acquired by the operational parameter acquisition unit to an out-of-roundness prediction model trained by machine learning, the model having one or more parameters selected from attribute information of the steel sheet, one or more operational parameters selected from operational parameters of the press bending step, and one or more operational parameters selected from operational parameters of the seam gap reduction step, as input data, and having steel pipe out-of-roundness information after the pipe expanding step, as output data.

The steel pipe out-of-roundness prediction device may include a terminal device including an input unit that acquires input information based on a user's operation, and a display unit that displays the out-of-roundness information, the operational parameter acquisition unit may update a part or all of the acquired operational parameters based on the input information acquired by the input unit, and the display unit may display the steel pipe out-of-roundness information predicted by the out-of-roundness prediction unit by using the updated operational parameters.

### Advantageous Effects of Invention

According to the steel pipe out-of-roundness prediction method and the steel pipe out-of-roundness prediction device of the present invention, it is possible to accurately predict the out-of-roundness of the steel pipe after the pipe expanding step in the steel pipe manufacturing step including a plurality of steps. In addition, according to a steel pipe out-of-roundness control method according to the present invention, it is possible to accurately control the out-of-roundness of the steel pipe after the pipe expanding step in the steel pipe manufacturing step including a plurality of steps. Furthermore, according to the steel pipe manufacturing method according to the present invention, it is possible to manufacture a steel pipe having desired out-of-roundness with good yield. Furthermore, according to the steel pipe out-of-roundness prediction model generation method of the present invention, it is possible to generate a steel pipe out-of-roundness prediction model that accurately predicts the out-of-roundness of a steel pipe after a pipe expanding step in a steel pipe manufacturing step including a plurality of steps.

### Brief Description of Drawings

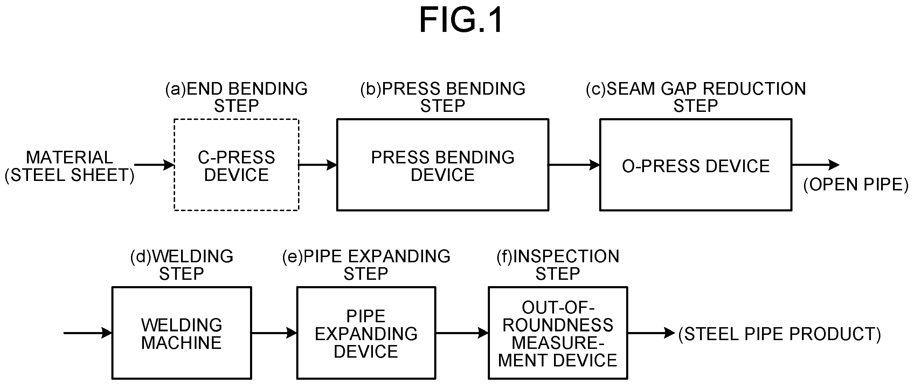

FIG. 1 is a diagram illustrating a steel pipe manufacturing step according to an embodiment of the present invention.

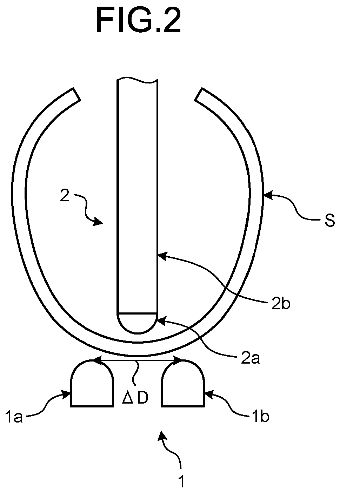

FIG. 2 is a diagram illustrating an example of a step of forming a formed body having a U-shaped cross section using a press bending device.

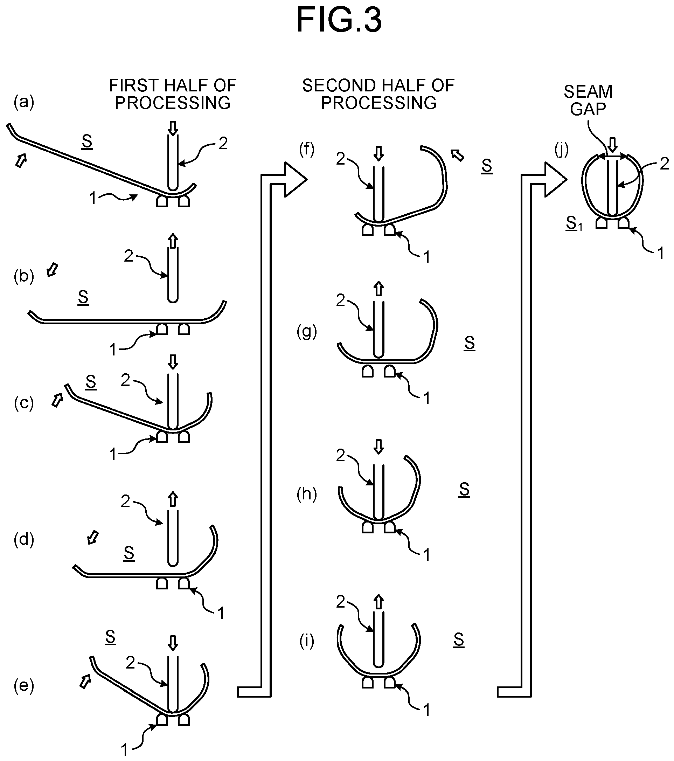

FIG. 3 is a diagram illustrating an example of a step of forming a formed body having a U-shaped cross section using a press bending device.

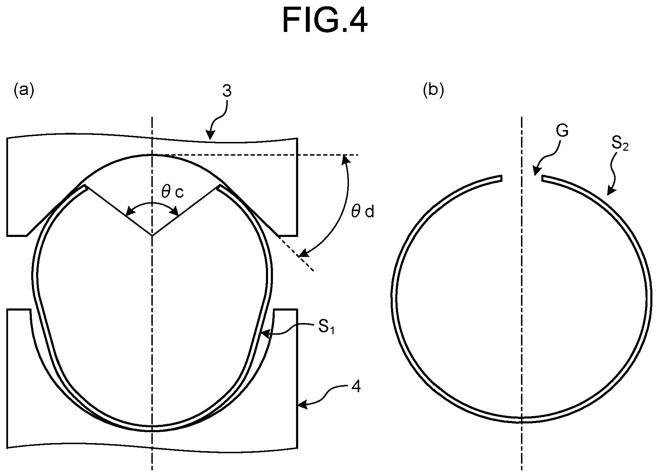

FIG. 4 is a diagram illustrating a configuration example of an O-press device.

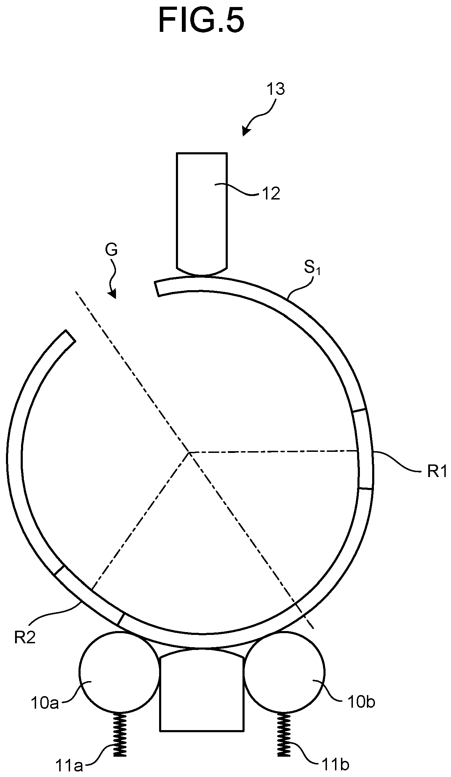

FIG. 5 is a diagram illustrating a configuration example of a closing press device.

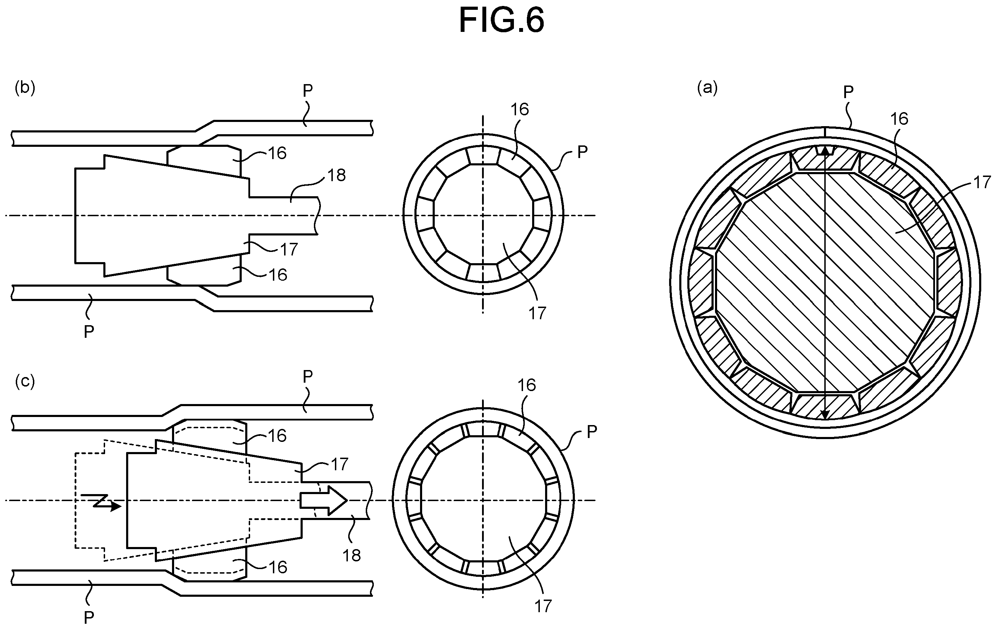

FIG. 6 is a diagram illustrating a configuration example of a pipe expanding device.

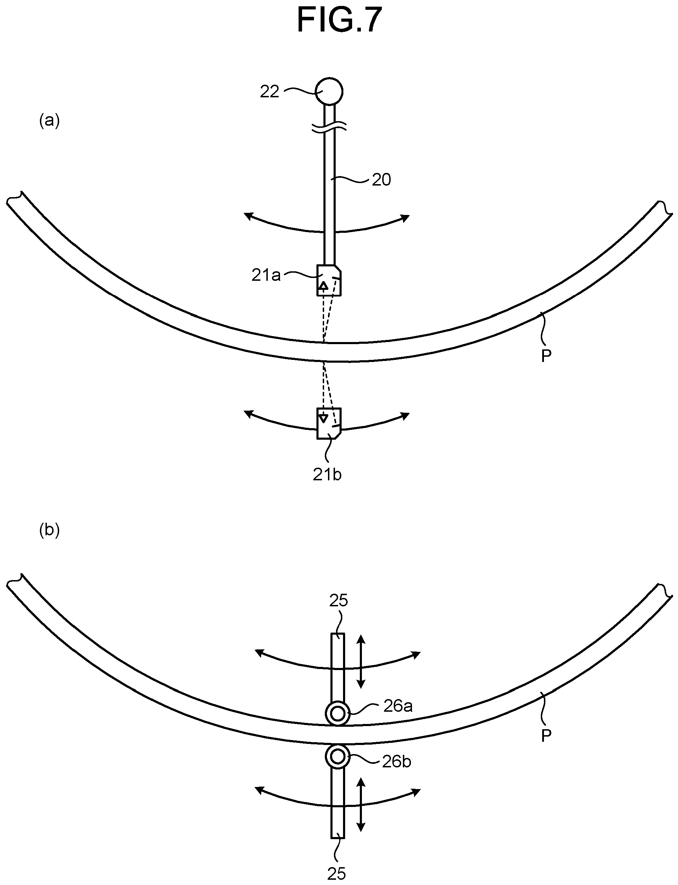

FIG. 7 is a diagram illustrating a configuration example of a measuring device of an outer diameter shape of a steel pipe.

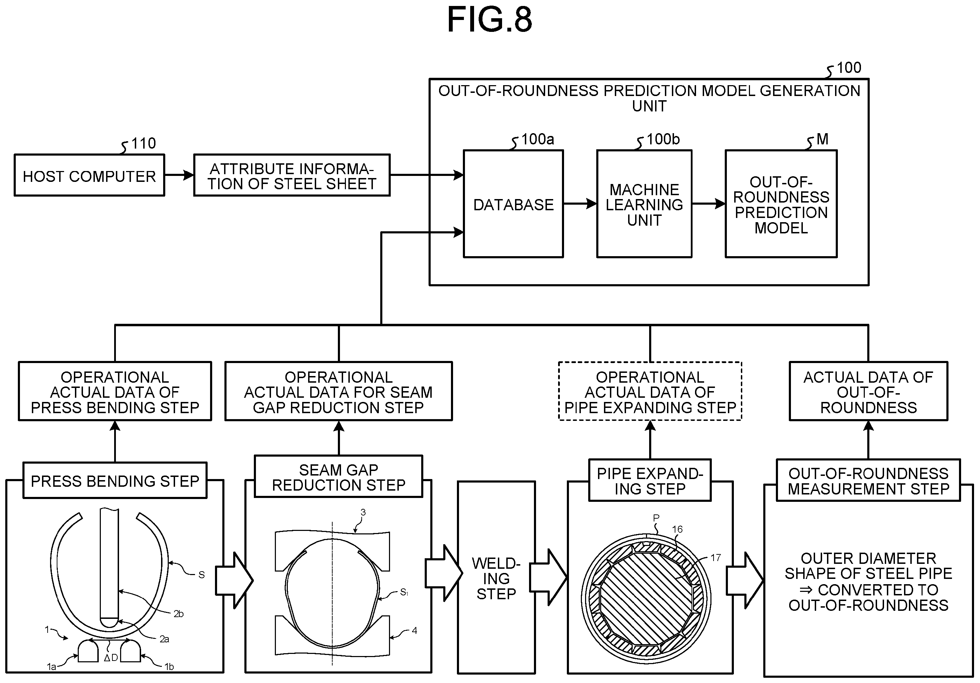

FIG. 8 is a diagram illustrating an out-of-roundness prediction model generation method according to an embodiment of the present invention.

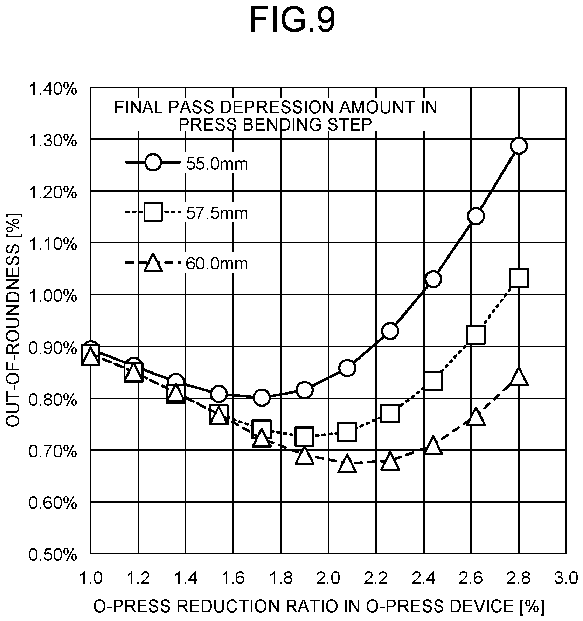

FIG. 9 is a diagram illustrating an example of a change in a relationship between a press working amount and out-of-roundness of a steel pipe after a pipe expanding step according to a change in the operational condition of the press bending step.

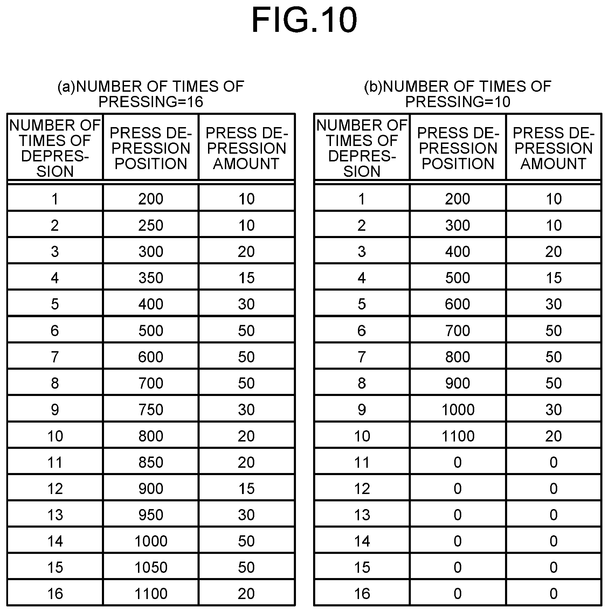

FIG. 10 is a diagram illustrating an example of a press depression position and a press depression amount for each number of times of pressing.

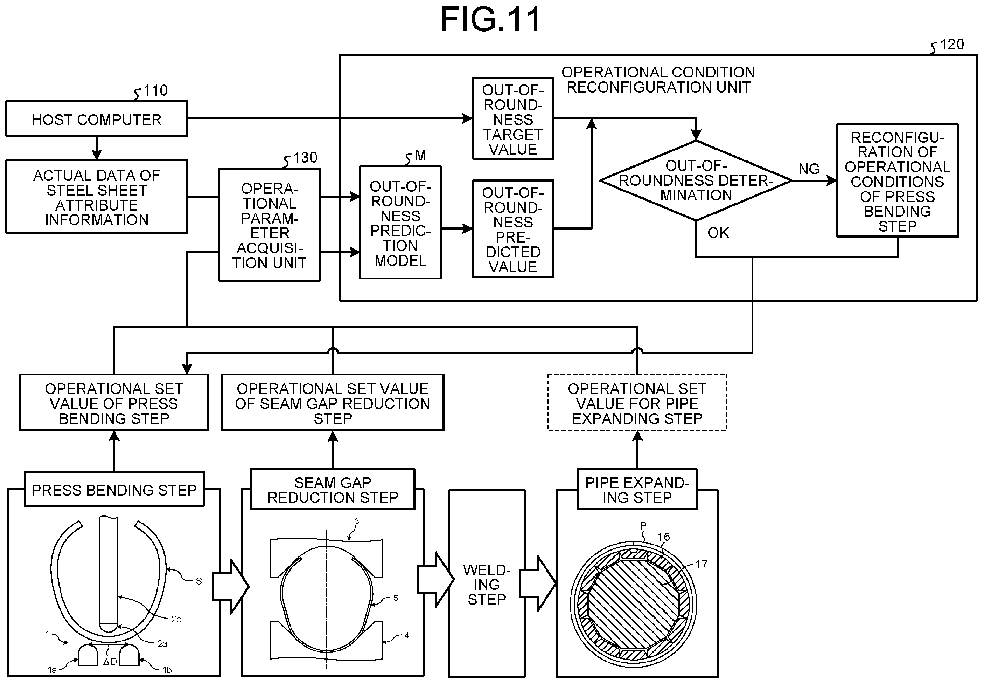

FIG. 11 is a diagram illustrating a flow of an out-of-roundness control method according to an embodiment of the present invention.

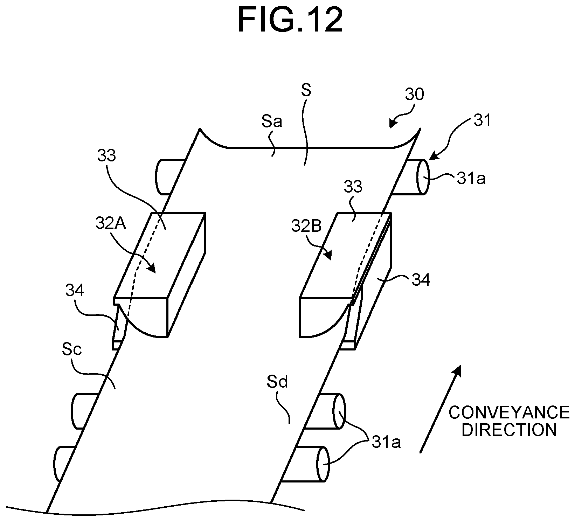

FIG. 12 is a perspective view illustrating an overall configuration of a C-press device.

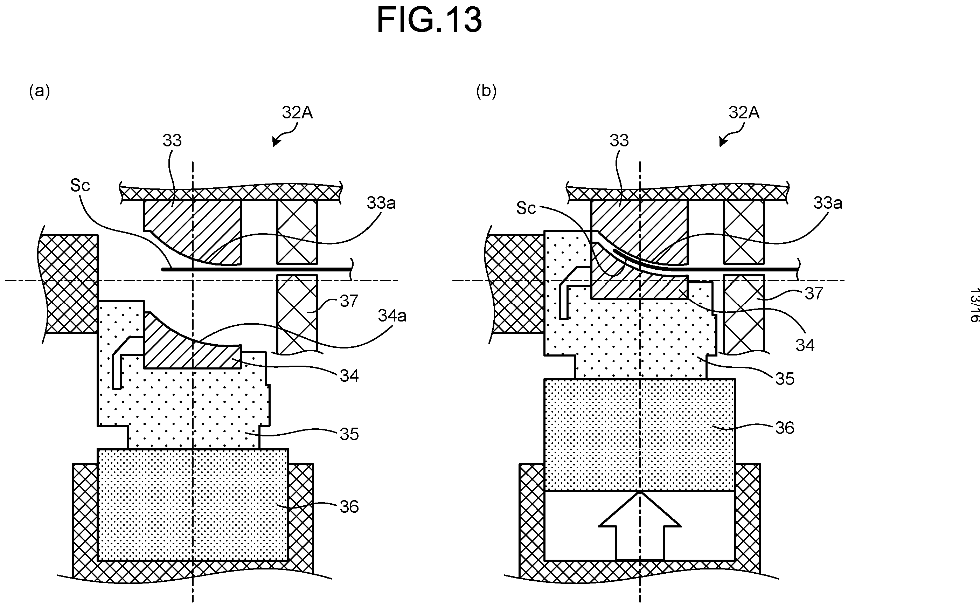

FIG. 13 is a cross-sectional view illustrating a configuration of a press mechanism.

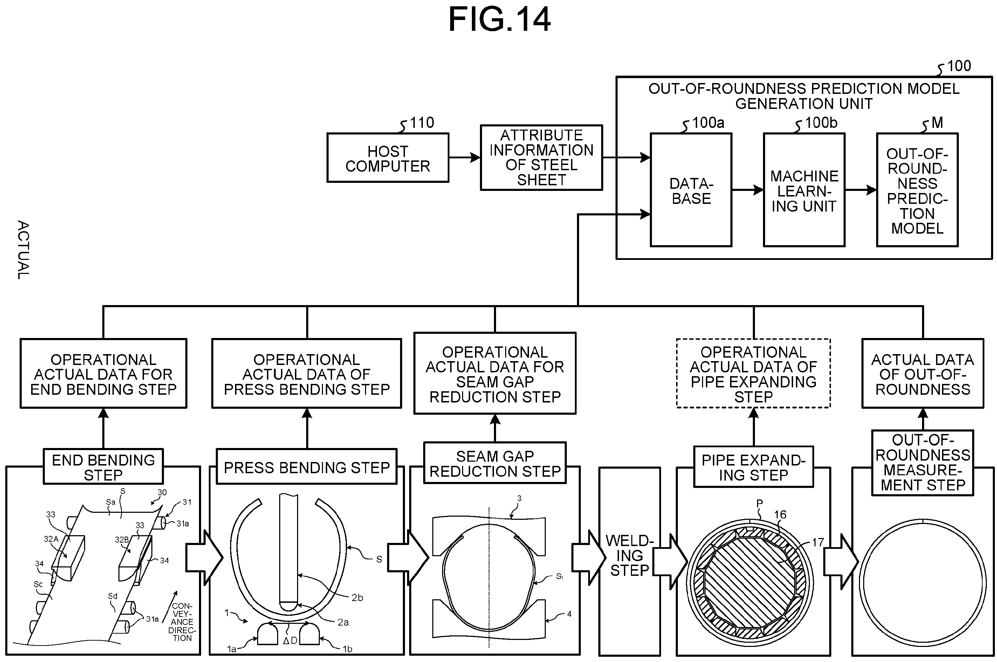

FIG. 14 is a diagram illustrating an out-of-roundness prediction model generation method according to another embodiment of the present invention.

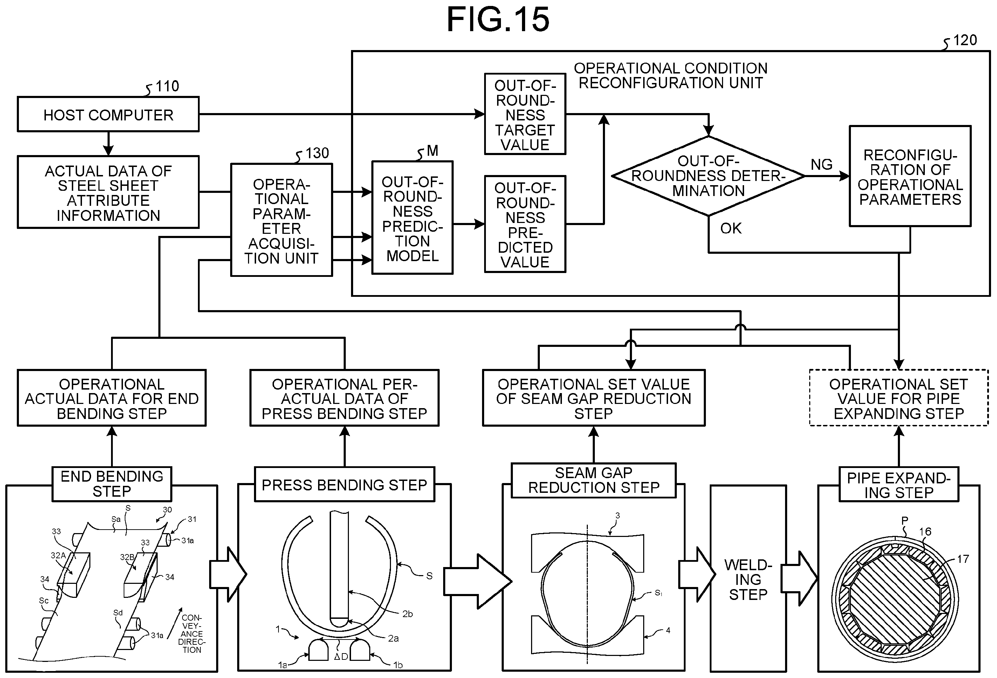

FIG. 15 is a diagram illustrating a steel pipe out-of-roundness control method according to an embodiment of the present invention.

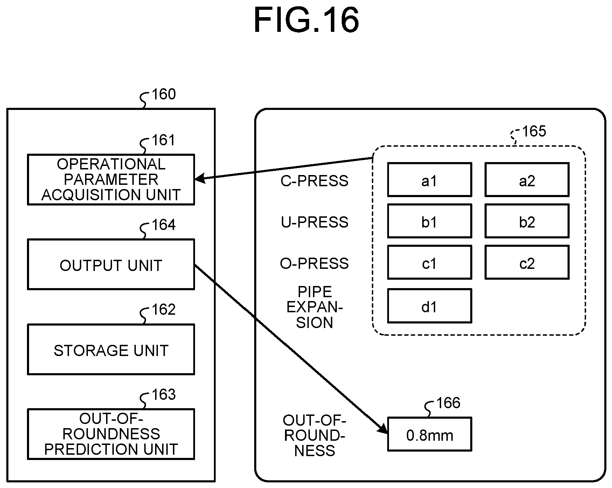

FIG. 16 is a diagram illustrating a configuration of a steel pipe out-of-roundness prediction device according to an embodiment of the present invention.

### Description of Embodiments

### [Steel pipe manufacturing step]

FIG. 1 is a diagram illustrating a steel pipe manufacturing step according to an embodiment of the present invention. As illustrated in FIG. 1, the steel pipe manufacturing step according to an embodiment of the present invention uses a thick steel sheet manufactured by a thick sheet rolling step which is a preprocessing step of the steel pipe manufacturing step, as a steel sheet to be a material. Here, the thick steel sheet typically has a yield stress of 245 to 1050 MPa, a tensile strength of 415 to 1145 MPa, a sheet thickness of 6.4 to 50.8 mm, a sheet width of 1200 to 4500 mm, and a length of 10 to 18 m. In addition, the end of the thick steel sheet in the width direction is ground in advance into a chamfered shape referred to as a bevel. This step is done for preventing overheating of the outer surface corner portion of the end of the sheet in the width direction to stabilize the welding strength in the subsequent welding step. In addition, since the width of the thick steel sheet will influence the outer diameter after formation into the steel pipe, the width is adjusted to a predetermined range in consideration of the deformation history in the subsequent steps.

The steel pipe manufacturing step sometimes includes execution of an end bending step of applying bending to the end of the steel sheet in the width direction. The end bending step, which is performed by a C-press device, performs an end bending processing (also referred to as crimping work) on the end of the steel sheet in the width direction. The C-press device includes a pair of upper and lower dies and a pair of upper and lower clamps that hold the central portion of the steel sheet in the width direction. Since the length of the die is shorter than the length of the steel sheet, the end bending processing is repeated while sequentially feeding the steel sheet in the longitudinal direction. Such end bending processing is applied on both ends of the steel sheet in the width direction. Since it is difficult to apply a bending moment to the end in the width direction in the 3-point bending press, the end bending step is performed to apply bending deformation in advance by the dies. This makes it possible to improve the out-of-roundness of the steel pipe as a final product. At this time, examples of the operational parameters for specifying the machining conditions include: an end bending processing width which is a length at which the die comes into contact with the steel sheet from the end in the width direction of the steel sheet toward the central direction in the width direction; a gripping force of the clamp; a feeding amount of the steel sheet when the end bending processing is repeated in the longitudinal direction of the steel sheet, a feeding direction, the number of times of feeding, and the like.

The subsequent press bending step is a step of processing the steel sheet into a formed body having a U-shaped cross section by performing 3-point bending press using a punch a plurality of times by a press bending device. The subsequent seam gap reduction step is a step of reducing the seam gap portion of the formed body having a U-shaped cross section by using an O-press device to form an open pipe. Note that the closing press method described in Patent Literature 4 may be used instead of the O-press device. The subsequent welding step is a step of restraining the seam gap portion formed at the end of the open pipe so as to allow the ends to be in contact with each other, and joining the ends to each other. With this step, the formed body is formed into a steel pipe having the ends joined to each other. The subsequent pipe expanding step is a step of using a pipe expanding device including a plurality of pipe expanding tools each having a curved surface obtained by dividing an arc into a plurality of portions to expand the steel pipe by bringing the curved surface of the pipe expanding tool into contact with the inner surface of the steel pipe. The steel pipe manufactured in this manner is subjected to the determination, in the inspection step, as to whether the quality such as the material property, the appearance, and the dimension satisfies a predetermined specification, and then shipped as a product. In the present embodiment, the inspection step includes an out-of-roundness measurement step of measuring the out-of-roundness of the steel pipe.

In the present embodiment, an end bending step, a press bending step, a seam gap reduction step, and a pipe expanding step, among a series of manufacturing steps including formation of a steel sheet into an open pipe and a pipe expanding step performed after welding, are referred to as "forming processing step". These steps are common steps of controlling the dimensions and shape of the steel pipe by applying plastic deformation to the steel sheet. Hereinafter, individual steps included in the steel pipe manufacturing step will be described in detail with reference to the drawings.

### <End bending step>

### <End bending step>

A C-press device that conducts end bending processing will be described in detail with reference to FIGS. 12 and 13. FIG. 12 is a perspective view illustrating an overall configuration of the C-press device. As illustrated in FIG. 12, a C-press device 30 includes: a conveyance mechanism 31 that conveys a steel sheet S in a direction along the longitudinal direction as a conveyance direction; a press mechanism 32A that bends one width direction end Sc of the sheet to a predetermined curvature with the downstream side of the steel sheet S in the conveyance direction as a front side; a press mechanism 32B that bends the other end Sd in the width direction to a predetermined curvature; and an interval adjustment mechanism (not illustrated) that adjusts the interval between the press mechanisms 32A and 32B on left and right according to the width of the steel sheet S subjected to end bending processing. The conveyance mechanism 31 includes a plurality of rotationally driven conveyance rolls 31a each disposed in front of and behind the press mechanisms 32A and 32B. Note that a reference sign Sa in the drawing indicates a leading end (front end in the longitudinal direction) of the steel sheet S.

FIG. 13(a) illustrates a cross section in the width direction of the press mechanism 32A that conducts bending processing on the one end Sc in the width direction of the steel sheet S as viewed in the direction from the upstream side to the downstream side in the conveyance direction of the steel sheet S. The press mechanism 32A and the press mechanism 32B are bilaterally symmetrical and have an identical configuration. The press mechanisms 32A/32B include an upper die 33 and a lower die 34 as a pair of dies arranged to face each other in the vertical direction, and a hydraulic cylinder 36 as a die moving means that pushes up the lower die 34 together with a tool holder 35 (moves in a direction approaching the upper die 33) and clamps the dies with a predetermined pressing force. The press mechanisms 32A and 32B may include a clamp mechanism 37 that grips the steel sheet S on the inner side of the upper die 33 and the lower die 34 in the width direction. The length of the steel sheet S in the longitudinal direction of the upper die 33 and the lower die 34 is normally shorter than the length of the steel sheet S. In this case, the end bending processing is performed a plurality of times while intermittently feeding the steel sheet S in the longitudinal direction by the conveyance mechanism 31 (refer to FIG. 12).

In the end bending step, the lower die 34 in contact with a surface on the outer side in the bending direction of the ends Sc and Sd in the width direction of the steel sheet S subjected to the end bending processing has a pressing surface 34a facing the upper die 33. The upper die 33 has a forming surface 33a having a convex curved surface facing the pressing surface 34a and having a curvature radius corresponding to the inner diameter of the steel pipe to be manufactured. The pressing surface 34a has a concave curved surface shape approaching the upper die 33 toward the outside in the width direction. However, although the pressing surface 34a of the lower die 34 has a concave curved surface shape, the pressing surface may be any surface that approaches the upper die 33 as it goes outward in the width direction, and may be an inclined plane. The curved surface shape of the upper die 33 and the lower die 34 is appropriately designed according to the thickness, the outer diameter of the steel pipe, and the like of the steel sheet S, and may be appropriately selected and used according to the target material.

FIG. 13(b) is a cross section of the press mechanism 32A in the width direction at the same position as FIG. 13(a), illustrating a state in which the lower die 34 is pushed up by the hydraulic cylinder 36 and clamped. The lower die 34 is pushed up by the hydraulic cylinder 36, and the end Sc of the steel sheet S in the width direction has been subjected to bending processing so as to be formed into a shape along the arc-shaped forming surface 33a of the upper die 33. The width to be subjected to end bending (end bending processing width) varies depending on the width of the steel sheet S, and is generally about 100 to 400 mm.

### <Press bending step>

FIG. 2 is a diagram illustrating an example of a step of forming a formed body having a U-shaped cross section using a press bending device. In the drawing, reference numeral 1 denotes a die disposed in a conveyance path of the steel sheet S. The die 1 includes a rod-shaped members 1a and 1b, provided in a left-right pair that support the steel sheet S at two positions in the conveyance direction, and an interval ΔD of the members can be changed according to the size of the steel pipe to be formed. In addition, a reference numeral 2 denotes a punch movable in a direction approaching and separating from the die 1. The punch 2 includes: a punch leading end 2a having a downward convex processing surface that is in direct contact with the steel sheet S and presses the steel sheet S in a concave shape; and a punch support 2b that is connected to the back surface of the punch leading end 2a and supports the punch leading end 2a. The maximum width of the punch leading end 2a is normally equal to the width (thickness) of the punch support 2b.

When performing bending processing on the steel sheet S using the press bending device having the above-described configuration, the steel sheet S is placed on the die 1, and 3-point bending press is sequentially performed by the punch 2 from both ends of the steel sheet S in the width direction toward the central portion as illustrated in FIG. 3 while intermittently feeding the steel sheet S at a predetermined feeding amount. FIG. 3 is a diagram illustrating a step of forming a formed body S₁ as illustrated in the right row diagram (j) in which a steel sheet S, preprocessed with end bending processing, is processed as in the top to the bottom of the left row (first half of processing (a) to (e)) then processed as in the top to the bottom of the center row (second half of processing (f) to (i)), by operations including bending processing and feeding of the steel sheet S. In FIG. 3, arrows assigned to the steel sheet S and the punch 2 indicate the moving directions of the steel sheet S and the punch 2 in individual steps. In the formed body S₁ having a U-shaped cross section as a result of being processed in this step, the gap between the ends is referred to as a "seam gap".

Here, examples of the operational parameters of determining operational conditions in the press bending step include the number of times of pressing, press position information, a press depression amount, a lower die interval, a punch curvature, and the like.

The number of times of pressing refers to the total number of times of pressing the steel sheet in the width direction by the 3-point bending press. The more the number of times of pressing, the smoother curved shape is obtained as a formed body having the U-shaped cross section, and the more improvement obtained in the out-of-roundness of the steel pipe after the pipe expanding step.

The press position information refers to a position in the width direction of the steel sheet to be pressed by the punch. Specifically, the position can be specified by a distance from one end of the steel sheet in the width direction or a distance based on the central portion of the steel sheet in the width direction. The press position information is preferably treated as data linked to the number of times of pressing (orders including the first to N-th times of pressing).

The press depression amount refers to a pushing amount of the punch 2 at each press depression position. The press depression amount is defined as an amount by which the lower end surface of the punch leading end 2a protrudes downward from a line connecting points on the uppermost surfaces of the die 1 illustrated in FIG. 2. At this time, since the pushing amount of the punch leading end 2a can be set to a different value for each pressing, it is preferable to treat the number of times of pressing and the press depression amount as linked data. Therefore, when the number of times of pressing is N, the operational condition in the press bending step is specified by 1 to N datasets with the number of times of pressing, the press position information, and the press depression amount as one set of datasets. The reason why these datasets are used is that, by partially changing the press position and the pushing amount of the punch in the press bending step, the entire cross-sectional shape the pipe changes in a state of an open pipe, which has an influence on the out-of-roundness of the steel pipe after the pipe expanding step. Still, there is no need to use all the N datasets as input variables of an out-of-roundness prediction model to be described below. It is allowable to use a method of selecting a condition having a large influence on the out-of-roundness of the steel pipe after the pipe expanding step and generating an out-of-roundness prediction model using press position information and the press depression amount at the start (first time) or the end (N-th time) of the press bending step.

The lower die interval is an interval between the rod-shaped members 1a and 1b, provided in a left-right pair as illustrated in FIG. 2, and is a parameter expressed by ΔD in the drawing. An increase in the lower die interval will change the local curvature of the steel sheet even for the same press depression amount, having an influence on the out-of-roundness of the steel pipe after the pipe expanding step. Therefore, it is preferable to use the lower die interval set according to the size of the steel pipe to be formed as the operational parameter in the press bending step. In addition, in a case where the lower die interval is changed every time the punch is pushed, data linked with the number of times of pressing may be used as the operational parameters.

The punch curvature refers to a curvature of a punch leading end used for the pressing. An increase in the punch curvature will also increase the local curvature applied to the steel sheet at the time of 3-point bending press, having an influence on the out-of-roundness of the steel pipe after the pipe expanding step. However, since it is difficult to change the punch curvature for each pressing when forming one steel sheet, it is preferable to use the punch curvature set according to the size of the steel pipe to be formed, as the operational parameter in the press bending step.

### <Seam gap reduction step>

The seam gap reduction step is a step of reducing the seam gap of formed body having a U-shaped cross section, formed by the press bending step, and applying a bending force and a compressive force so as to bring the ends of the U-shaped cross section formed body close to each other. At this time, even with the bending force or a compressive force applied to the formed body of a U-shaped cross section, the seam gap would be widened due to spring back at the time of unloading. Therefore, taking the occurrence of spring back into account, a strong bending force or a compressive force is applied, so as to apply deformation to crush the U-shaped cross section of the formed body in the longitudinal direction as a whole.

FIG. 4 illustrates a configuration of an O-press device typically used as a seam gap reduction step. As illustrated in FIG. 4(a), using an upper die 3 and a lower die 4, the O-press device applies compressive deformation in the longitudinal direction of the formed body S₁ having a U-shaped cross section. At this time, the surfaces of the upper die 3 and the lower die 4 in contact with the formed body S₁ having a U-shaped cross section are worked into a curved surface shape. By bringing the upper die 3 and the lower die 4 close to each other, the lower portion of the formed body S₁ having a U-shaped cross section is restrained along the curved surface of the lower die 4. The upper portion of the formed body S₁ including the end receives the bending force and the compressive force by the upper die 3, so as to bring the ends close to each other along the curved surface of the upper die 3. This temporarily reduces the seam gap between the ends facing each other in the circumferential direction. Thereafter, by releasing the pushing by the die, the seam gap is expanded by the spring back, and the final opening amount of a seam gap portion G of an open pipe S₂ illustrated in FIG. 4(b) is determined. At this time, the O-press depression amount is a value obtained by subtracting the distance between an uppermost point of an inscribed surface of the upper die 3 and a lowermost point of an inscribed surface of the lower die 4 at the time of pushing the die from the target outer diameter of the steel pipe. These ratios are also referred to as an O-press reduction ratio.

Here, examples of the operational parameters for specifying the operational conditions in the seam gap reduction step include an O-press depression position, an O-press die R, and the like in addition to the O-press depression amount.

The O-press depression position refers to an angle formed by a vertical line and a line connecting the end of the seam gap portion of the formed body S₁ having a U-shaped cross section and the center position of the formed body S₁ in the width direction. Furthermore, the O-press die R refers to a curvature of a region of the upper die 3 and the lower die 4 in contact with the formed body S₁. Here, the greater the O-press depression amount in the O-press device, the greater the curvature of the formed body S₁ around the three o'clock and the nine o'clock, which lowers the final out-of-roundness of the steel pipe.

On the other hand, when the closing press method is used instead of the O-press device, the closing press device illustrated in FIG. 5 is used as a device for forming the open pipe S₂ from the formed body S₁. As illustrated in FIG. 5, the closing press device includes lower tools 10a and 10b. The lower tools 10a and 10b are provided at intervals from each other, and each include a drive mechanism capable of reversing the rotation direction. In addition, the lower tools 10a and 10b are supported via spring means 11a and 11b and the like. An upper tool 13 including a punch 12 is disposed so as to face the lower tools 10a and 10b. A pushing force is applied to the formed body S₁ having a U-shaped cross section from the outside through the punch 12.

At this time, the formed body S₁ having a U-shaped cross section is formed into the open pipe S₂ through two steps. In the first step, the press position of the formed body S₁ is positioned via the rotatable lower tools 10a and 10b such that a region R1, which is located on the right side of the seam gap portion G and a target region of application of bending deformation, is positioned in the vicinity of three o'clock, as schematically illustrated by a one-dot chain line. Subsequently, a pushing force is applied by the punch 12, and unloading of the punch 12 is performed after application of the pushing force. Next, similar to the first step, operation of a second step is performed in which the press position is positioned so that the region R2, located on the left side of the seam gap portion G and a target region of application of bending deformation, is positioned in the vicinity of nine o'clock. Thereafter, a pushing force is applied by the punch 12, and unloading of the punch 12 is performed after application of the pushing force, whereby the formed body S₁ is formed into the open pipe S₂.

Here, the press position in the first and second steps is indicated by an angle of a line connecting the center of the seam gap portion G and the center position of the steel sheet in the width direction (an angle formed by the one-dot chain line and the vertical line in FIG. 5). The pushing force in the first and second steps refers to a pressing force applied to the formed body S₁ by the punch 12.

### <Welding step>

Thereafter, the end surfaces of the seam gap portions of the open pipe S₂ are butted against each other and welded by a welding machine (joining means) to form a steel pipe. The welding machine (joining means) to be used is, for example, a device including three types of welding machines, that is, a tack welding machine, an inner surface welding machine, and an outer surface welding machine. In these welding machines, the tack welding machine brings the surfaces butted by the cage rolls into close contact with each other continuously in an appropriate positional relationship, and welds the close contact portion over the entire length in the pipe axis direction. Next, the tacked pipe is welded (submerged arc welding) from the inner surface of the butt portion by an inner surface welding machine, and further welded (submerged arc welding) from the outer surface of the butt portion by an outer surface welding machine.

### <Pipe expanding step>

The steel pipe having the seam gap portion welded is processed such that a pipe expanding device is inserted into the steel pipe to expand the diameter of the steel pipe (referred to as pipe expansion). FIGS. 6(a) to 6(c) are diagrams illustrating a configuration example of the pipe expanding device. As illustrated in FIG. 6(a), the pipe expanding device includes a plurality of pipe expanding dies 16 having curved surfaces obtained by dividing an arc into a plurality of arcs along the circumferential direction of a tapered outer circumferential surface 17. When expanding the steel pipe using the pipe expanding device, as illustrated in FIGS. 6(b) and 6(c), the pipe expanding die 16 is first aligned with a pipe expanding start position by moving the steel pipe P using a steel pipe moving device. Then, by retracting a pull rod 18 from the pipe expanding start position, first pipe expanding processing is performed. This allows each of the pipe expanding dies 16 in sliding contact with the tapered outer circumferential surface 17 to be displaced in the radial direction by a wedge action, expanding the steel pipe P. This reduces the level of irregularity in the cross-sectional shape of the steel pipe P, bringing the cross-sectional shape of the steel pipe P closer to a perfect circular shape. Next, the pull rod 18 is advanced to the pipe expanding start position to return the pipe expanding dies 16 to the inside in the vertical axial direction by a release mechanism, and then the steel pipe P is further moved by an amount corresponding to the pitch (axial length) of the pipe expanding dies 16. The pipe expanding dies 16 are adjusted to new pipe expanding positions, and then the above operation is repeated. This makes it possible to perform the first pipe expanding processing over the entire length of the steel pipe P by the pitch of the pipe expanding dies 16.

At this time, examples of the operational parameters for determining the operational conditions of the pipe expanding step include the pipe expansion rate, the number of pipe expanding dies, and the diameter of the pipe expanding dies. The pipe expansion rate refers to a ratio of a difference between an outer diameter after pipe expansion and an outer diameter before pipe expansion to an outer diameter before pipe expansion. The outer diameter before and after pipe expansion can be calculated by measuring the circumferential length of the steel pipe.
The pipe expansion rate can be adjusted by a stroke amount when the pipe expanding dies are expanded in a radial direction. The number of pipe expanding dies refers to the number of dies that abut on the steel pipe disposed in the circumferential direction when pipe expansion is performed. The pipe expanding die diameter refers to a curvature of a portion of each pipe expanding die that abuts on the steel pipe.

Among these, the operational parameter that can easily adjust the out-of-roundness after the pipe expanding step is the pipe expansion rate. An increase in the pipe expansion rate will apply the curvature of the region in contact with the pipe expanding die over the entire circumference uniformly onto the pipe according to the pipe expanding dies R, leading to improvement of the out-of-roundness. At this time, the greater the number of pipe expanding dies, the more the local variation in curvature in the circumferential direction of the steel pipe can be suppressed, making it possible to achieve satisfactory out-of-roundness of the steel pipe after the pipe expanding step. On the other hand, however, an excessive large pipe expansion rate might lower the compressive yield strength of the steel pipe product due to the Bauschinger effect. When a steel pipe is used as a line pipe or the like, high compressive stress acts in the pipe circumferential direction. Therefore, high compressive yield strength is required as a material of the steel pipe, and it is not appropriate to increase the pipe expansion rate more than necessary. Consequently, the pipe expansion rate in actual operation is set such that the out-of-roundness of the steel pipe falls within a predetermined value at a pipe expansion rate lower than the preset upper limit value of the pipe expansion rate.

### <Out-of-roundness measurement step>

In an inspection step as the last manufacturing step of the steel pipe, the quality of the steel pipe is inspected, and the out-of-roundness of the steel pipe is measured. The out-of-roundness measured in the out-of-roundness measurement step is an index representing the degree of deviation of the outer diameter shape of the steel pipe from the perfect circle. Usually, the closer the out-of-roundness is to zero, the closer the cross-sectional shape of the steel pipe is to a perfect circle. The out-of-roundness is calculated based on the outer diameter information of the steel pipe measured by the out-of-roundness measurement device. For example, the tube is equally divided in the circumferential direction at a certain tube length position and the outer diameters at the opposing positions are measured. When the maximum diameter and the minimum diameter among them are defined as Dmax and Dmin, respectively, the out-of-roundness can be defined as Dmax-Dmin. At this time, as more the number of divisions into equal parts, the more the small irregularities in the steel pipe after the pipe expanding step can be a numerical index, which is preferable. Specifically, it is preferable to use information divided into 4 to 36000 equal parts. It is more preferable to use equal parts of 360 or more.

Furthermore, the position in the longitudinal direction of the steel pipe targeted for the out-of-roundness measurement can be arbitrarily selected. The out-of-roundness in the vicinity of the end in the longitudinal direction of the steel pipe may be measured, or the out-of-roundness in the central portion in the longitudinal direction of the steel pipe may be measured. In addition, a plurality of out-of-roundness measurement positions may be selected from the longitudinal direction of the steel pipe to measure the out-of-roundness at each position, or an average value of the out-of-roundness measured at a plurality of positions in the longitudinal direction may be obtained. However, the out-of-roundness does not necessarily have to be represented by the difference between the maximum diameter and the minimum diameter. It is also allowable to use a method of calculating an equivalent temporary perfect circle (diameter) having the same area as the area inside the curve of a figure representing the outer diameter shape of the steel pipe in a continuous diagram and defining a region deviated from the outer diameter shape of the steel pipe as an image based on the temporary perfect circle. As a means of measuring the outer diameter shape of the steel pipe, for example, the following methods can be used.
(a) As illustrated in FIG. 7(a), using a device including an arm 20 rotatable by 360 degrees about a substantially central axis of the steel pipe P, displacement gauges 21a and 21b attached to the distal end of the arm 20, and a rotation angle detector 22 that detects the rotation angle of the rotation shaft of the arm 20, a distance between the rotation center of the arm 20 and a measurement point on the outer circumference of the steel pipe P is measured with the displacement gauges 21a and 21b for each unit of minute angle of rotation of the arm 20, and then the outer diameter shape of the steel pipe P is specified based on the measured value.
(b) As illustrated in FIG. 7(b), using a device including a rotating arm 25 that rotates about the central axis of the steel pipe P, a frame (not illustrated) that is provided on the end side of the rotating arm 25 so as to be movable in the radial direction of the steel pipe P, a pair of pressing rollers 26a and 26b that comes into contact with the outer surface and the inner surface of the end of the steel pipe P and rotates with the rotation of the rotating arm 25, and a pair of pressing air cylinders fixed to the frame that presses the pressing rollers 26a and 26b against the outer surface and the inner surface of the steel pipe P, the outer diameter shape of the steel pipe is specified based on the amount of movement in the radial direction of the frame and the pressing positions of the pressing rollers 26a and 26b by the individual pressing air cylinders.

Here, in the present embodiment, by comparing an out-of-roundness prediction result obtained by the out-of-roundness prediction model to be described below with the measured value of the out-of-roundness obtained in the inspection step described above, it is possible to verify the out-of-roundness prediction accuracy. Therefore, with respect to the prediction result of the out-of-roundness prediction model to be described below, it is also possible to improve the prediction accuracy by adding the actual value of the prediction error to the prediction result of the out-of-roundness prediction model.

### [Out-of-roundness prediction model generation method]

FIG. 8 is a diagram illustrating an out-of-roundness prediction model generation method according to an embodiment of the present invention. an out-of-roundness prediction model generation unit 100 in the drawing collects actual data of attribute information of a steel sheet to be a material, operational actual data of a press bending step, operational actual data of a seam gap reduction step, and actual data of out-of-roundness of a steel pipe after a pipe expanding step, and then generates an out-of-roundness prediction model M by machine learning.

The actual data of the attribute information of the steel sheet is transferred from a host computer 110 to the out-of-roundness prediction model generation unit 100. However, data may be transferred to the out-of-roundness prediction model generation unit 100 by a procedure of measuring the attribute information of the steel sheet before starting forming in the press bending step and inputting the result from a terminal or the like. In addition, the operational actual data of the press bending step, the operational actual data of the seam gap reduction step, and the operational actual data of the out-of-roundness after the pipe expanding step are transferred to the out-of-roundness prediction model generation unit 100, and are accumulated in a database 100a in a form of being linked as data for each target material specified by the production number, the product number, and the like. Furthermore, operational actual data of the pipe expanding step may be added to the database 100a. The operational actual data to be accumulated in the database 100a may be various data that can be collected as actual data. This is because even information not used for the actual data in generation of the out-of-roundness prediction model M by machine learning can be utilized when the out-of-roundness prediction model M is generated again later, making it possible to eliminate the need to accumulate data again.

FIG. 14 is a diagram illustrating another embodiment of the out-of-roundness prediction model generation method. This is an example of a case where the operational actual data of each manufacturing step is acquired and accumulated in the database of the out-of-roundness prediction model generation unit for the manufacturing step including the end bending step before the press bending step as the steel pipe forming processing step.

The number of pieces of actual data to be accumulated in the database 100a as described above is to be at least 10 or more, preferably 100 or more, and more preferably 1000 or more. This is because, the more the number of pieces of data as the basis of machine learning model, the more improved the prediction accuracy of the out-of-roundness after the pipe expanding step. In the present embodiment, using the database 100a created in this manner, a machine learning unit 100b generates the out-of-roundness prediction model M by machine learning in which at least one or more piece of actual data selected from the attribute information of the steel sheet, one or more piece of actual data selected from the operational actual data of the press bending step, and one or more pieces of actual data selected from the operational actual data of the seam gap reduction step are used as input actual data, and actual data of the out-of-roundness of the steel pipe after the pipe expanding step in the steel pipe manufacturing step using the input actual data is used as output actual data. In addition, one or more pieces of actual data selected from the operational actual data of the pipe expanding step may be added to the input actual data as necessary. Furthermore, when the end bending step is performed before the press bending step, one or more pieces of actual data selected from the operational actual data of the end bending step may be added to the input actual data.

The method of machine learning may be a known learning method. The machine learning is implemented by using, for example, a known machine learning method such as a neural network. Examples of other methods include decision tree learning, random forest, and support vector regression. In addition, an ensemble model combining a plurality of models may be used. Furthermore, it is also allowable to generate, as the out-of-roundness prediction model M, a machine learning model that determines whether the value is within a predetermined allowable range of out-of-roundness instead of the value of out-of-roundness, and that uses data obtained by binarizing the result into accept/fail as output actual data. At that time, a classification model such as k-nearest neighbor algorithm or logistic regression can be used. Additionally, the database 100a can accumulate the operational actual data as needed and periodically (for example, monthly) update the out-of-roundness prediction model M. This improves the prediction accuracy of the out-of-roundness prediction model M.

The out-of-roundness prediction model M for the steel pipe after the pipe expanding step generated as described above has the following characteristics. That is, as the attribute information of the steel sheet, for example, the yield stress, the sheet thickness, and the like has a certain level of variation in manufacturing the steel sheet as a material, and this will have an influence on the curvature of the steel sheet and the curvature after unloading at the time of punch pushing in the 3-point bending press in the press bending step. Therefore, by using the attribute information of these steel sheets as input parameters for the steel pipe out-of-roundness prediction model M after the pipe expanding step, the influence of the yield stress, the sheet thickness, and the like on the out-of-roundness can be taken into consideration. In addition, the seam gap reduction step is a step of applying a bending force and a compressive force using a die or the like as well, and changes the curvature of the steel sheet after unloading depending on the yield stress, the sheet thickness, and the like, and thus, the information is to be used as input parameters of the out-of-roundness prediction model M.

Furthermore, since the press bending step is a step of performing a discontinuous curvature application processing a plurality of times in the width direction of the steel sheet, a local curvature distribution occurs in the steel sheet in the width direction. Thereafter, when combined deformation of compression and bending is applied as in the seam gap reduction step, the bending moment applied in the seam gap reduction step is locally distributed according to the local curvature distribution of the steel sheet applied in the press bending step, similarly to the case where the bending moment acting on the beam referred to as "curved beam" varies depending on the curvature of the beam. This will cause the operational conditions of the press bending step to have an influence on the curvature distribution in the width direction of the steel sheet after the seam gap reduction step. In this respect, there is a significance of using both the operational parameters of the press bending step and the seam gap reduction step as input parameters for the out-of-roundness prediction model M.

For example, FIG. 9 illustrates a result of measuring the out-of-roundness of a steel pipe after the pipe expanding step (with the same setting of operational conditions of the pipe expanding step) while changing the O-press reduction ratio of an O-press device as the seam gap reduction step under the condition that the number of times of pressing is set to nine in the press bending step in manufacturing a steel pipe having an outer diameter of 30 inches and a pipe thickness of 44.5 mm. FIG. 9 illustrates a result of changing the depression amount (final pass depression amount) at the time of the last (ninth) pressing by three levels while using the same settings in the other operational conditions in the press bending step.

As illustrated in FIG. 9, as the press working amount in the seam gap reduction step, there is an optimum value for bringing the value used as an index of the steel pipe out-of-roundness after the pipe expanding step close to zero, but the optimum value varies depending on the operational conditions of the press bending step. That is, it is obvious that, in order to reduce the out-of-roundness of the steel pipe after the pipe expanding step, there is a need to change the operational conditions of the seam gap reduction step according to the operational conditions of the press bending step, it is not possible to set appropriate operational conditions only by focusing on the point that the operational conditions of the press bending step and the seam gap reduction step have an influence on the out-of-roundness of the steel pipe after the pipe expanding step as independent parameters. Hereinafter, parameters used for machine learning will be described.

### <Attribute information of steel sheet>

The applicable attribute information of the steel sheet to be a material can be any parameter having an influence on the out-of-roundness of the steel pipe after the pipe expanding step, such as yield stress of the steel sheet, tensile strength, modulus of longitudinal elasticity, sheet thickness, sheet thickness distribution in the sheet plane, yield stress distribution in the sheet thickness direction of the steel sheet, the degree of the Bauschinger effect, and surface roughness. In particular, it is preferable to use, as an index, a factor having an influence on the deformation state and spring back of the steel sheet by the 3-point bending press in the press bending step, and a factor having an influence on the deformation state and spring back of the steel sheet by compression/bending processing in the seam gap reduction step.

The yield stress of the steel sheet, the distribution of the yield stress in the sheet thickness direction of the steel sheet, and the sheet thickness have a direct influence on the state of stress and strain in the 3-point bending press. The tensile strength is a parameter reflecting the state of work hardening in bending processing, and has an influence on the stress state during bending deformation. The Bauschinger effect has an influence on the yield stress and the subsequent work hardening behavior when the load due to bending deformation is reversed, and influence on the stress state during bending deformation. In addition, the modulus of longitudinal elasticity of the steel sheet has an influence on the spring back behavior after the bending processing. Furthermore, the sheet thickness distribution in the sheet plane generates the distribution of the bending curvature in the press bending step, and the surface roughness has an influence on the frictional state between the die and the steel sheet in the seam gap reduction step, leading to an influence on the out-of-roundness of the steel pipe after the pipe expanding step.

Among these pieces of attribute information, it is particularly preferable to use the yield stress, the representative sheet thickness, the sheet thickness distribution information, and the representative sheet width. These items, which are information measured in a quality inspection step of a thick sheet rolling step which is a step of manufacturing a steel sheet to be a material, have an influence on deformation behavior in a press bending step and a seam gap reduction step as well as having an influence on out-of-roundness of a steel pipe after the pipe expanding step. Furthermore, this is because the attribute information has a variation for each steel sheet as a material.

The yield stress is information that can be obtained from a tensile test of a small test piece for quality assurance collected from a thick steel sheet to be a material, and may be a representative value in a plane of the steel sheet to be a material. In addition, the representative sheet thickness is a sheet thickness representing a sheet thickness in a plane of a steel sheet to be a material, and may be a sheet thickness of a central portion in a width direction of the steel sheet at an arbitrary position in a longitudinal direction of the steel sheet may be used, or an average value of sheet thicknesses in the longitudinal direction. Furthermore, an average value of the sheet thicknesses of the entire in-plane sheet of the steel sheet may be obtained and used as the representative sheet thickness. In addition, the sheet thickness distribution information refers to information representing the sheet thickness distribution in the width direction of the steel sheet. A typical example is a crown occurring in a steel sheet. The crown represents a difference in the sheet thickness between a central portion of the steel sheet in the width direction, and a position away from the end of the steel sheet in the width direction by a predetermined distance (for example, 100 mm, 150 mm, or the like). However, the sheet thickness distribution information is not limited thereto, and a coefficient of an approximate expression obtained by approximating the sheet thickness distribution in the width direction with a quadratic or higher function may be used as the sheet thickness distribution information. Such representative sheet thickness and sheet thickness distribution information may be acquired from data measured by a sheet thickness meter during rolling in a thick sheet rolling step, or may be data measured in a thick steel sheet inspection step.

The representative sheet width is a representative value regarding the width of the steel sheet as a material. There is a case where there is a variation in the width of the thick steel sheet to be a material or the width of the steel sheet varies when the end is ground by beveling, which will influence the variation in the outer diameter accuracy of the steel pipe to be a product. The value of the representative sheet width may be a width at an arbitrary position in the longitudinal direction of the steel sheet, or may be an average value of the widths in the longitudinal direction. At that time, it is preferable to actually measure the width of the steel sheet before the press bending step and use the measured value.

### <Operational parameters in end bending step>

When the operational parameters of the end bending step are used for input of the out-of-roundness prediction model, a parameter for specifying the shape formed by the forming surface 33a of the upper die 33 and the shape formed by the pressing surface 34a of the lower die 34 used in the C-press device 30 can be used as the operational parameter. In addition, it is also allowable to use an end bending processing width (width subjected to end bending forming), a feeding amount, a feeding direction, and the number of times of feeding of the steel sheet, a push-up force (C-press force), and a gripping force by the clamp mechanism 37 in the end bending step, as operational parameters. This is because these items are factors having an influence on the deformation of the end of the steel sheet in the width direction in the end bending step.

Here, there are cases where the shape formed by the forming surface 33a of the upper die 33 is given as a shape having arcs of a plurality of curvature radii provided in a continuous shape or the shape is given by an involute curve or the like, allowing the use of a parameter for specifying a geometric cross-sectional shape. For example, when the cross-sectional shape is formed by a parabolic shape, the cross-sectional shape can be specified by using coefficients of a first-order term and a second-order term of a quadratic expression representing a parabola passing through an origin, and thus such a coefficient can be used as an operational parameter for the end bending step.

On the other hand, in a case where a plurality of dies are provided as the shape formed by the forming surface 33a of the upper die 33 and the dies are appropriately replaced and used according to conditions such as the outer diameter, the wall thickness, and the steel type of the steel pipe to be manufactured, a die management number for specifying the die used in the end bending step may be used as the operational parameter of the end bending step.

### <Operational parameters for press bending step>

In the present embodiment, the operational parameter for the press bending step is used for the input to the out-of-roundness prediction model. The operational parameters for the press bending step may be various parameters having an influence on the local bending curvatures of the steel sheet and the distribution thereof in the steel sheet width direction, such as the number of times of pressing of the 3-point bending press, press position information, press depression amount, lower die interval, and punch curvature described above. In particular, it is preferable to use information including all of press position information and the press depression amount in an operation of the punch pressing the steel sheet, and the number of times of pressing performed through the press bending step. The method illustrated in FIG. 10 can be exemplified as a case of including all of these pieces of information. FIGS. 10(a) and 10(b) each illustrate an example of the press depression position and the press depression amount when the punches are pressed with the number of times of pressing of 16 times/10 times with respect to the steel sheets having the same width. At this time, the press depression position is information indicating a distance from a reference end of the steel sheet in the width direction, and is used as the press depression position information. In addition, the press depression amount is described corresponding to each press depression position, and such "number of times of depression", "press depression position", and "press depression amount" can be integrated as a set of data. In the examples illustrated in FIGS. 10(a) and 10(b), the operational parameters of the press bending step are specified by 16 sets of data and 10 sets of data at the number of times of pressing of 16 times and 10 times, respectively.

In the present embodiment, such a dataset is used as an input of an out-of-roundness prediction model in the following form. For example, as inputs of the out-of-roundness prediction model, it is possible to use a press depression position and a press depression amount when performing press depression at a position closest to the end at one end of the steel sheet, and possible to use a pressing depression position and a press depression amount when performing pressing depression at a position closest to the end at the other end of the steel sheet. When the press depression amount at one end of the steel sheet is increased in the 3-point bending press, curvatures at portions of the steel pipe in FIG. 2 corresponding to approximately one o'clock and a portion corresponding to approximately eleven o'clock are increased, leading to formation of the formed body having a U-shaped cross section with a horizontally long shape as a whole. In addition, the closer the press depression position is to the end of the steel sheet, the lower the position of the seam gap portion, leading to formation of the formed body having a U-shaped cross section with a horizontally long shape as a whole. As a result, the steel pipe formed into the open pipe and subjected to the welding step and the pipe expanding step will also have a horizontally long shape as a whole, having an influence on the out-of-roundness. Furthermore, the punch curvature at the time of press depression, the total number of times of press depression, and the interval between the lower dies at the time of press depression also has an influence on the out-of-roundness after formed into a steel pipe.

Meanwhile, by using, as an input of the out-of-roundness prediction model, all the press depression position information and the data of the press depression amount together with the number of times of pressing, it is possible to further improve the prediction accuracy of the out-of-roundness prediction model. For example, based on the assumed maximum number of times of pressing, data of the press depression position and the press depression amount is stored according to the number of times of pressing in the case of performing pressing. The press depression position and the press depression amount in the subsequent press working with no pressing are set to zero. For example, in an assumed case where the maximum assumable number of times of pressing is 16 times in the examples illustrated in FIGS. 10(a) and 10(b), and when the number of times of pressing is 10, the data of the 11th to 16th press, which is set to zero, will be input to the out-of-roundness prediction model. At this time, as the operational actual data in the press bending step, the number of times of pressing, the press depression position, and the press depression amount are information necessary for controlling the press bending device, and thus, set values set by a host computer can be used. However, in a case where a measurement device that measures the pressing position and the pressing amount of the punch is provided, the measurement result may be used as the operational actual data.

### <Operational parameter of seam gap reduction step >

In the present embodiment, the operational parameters of the seam gap reduction step are used for the input to the out-of-roundness prediction model. When an O-press device is used as the seam gap reduction step, an O-press depression amount, an O-press depression position, and an O-press die R can be used. In another case where the closing press method is used, the closing press depression position and the closing press pushing force in each step described above are used. When an O-press device is used in particular, it is preferable to use an O-press depression amount. This is because, an increase in the O-press depression amount would lead to a state where a region between the point where the steel pipe receives the restraining and pressing force from the upper die and the point where the steel pipe is restrained by the lower die, mainly in the vicinity of three o'clock and nine o'clock portions of the steel pipe, are not restrained, to which bending and compression deformations are concentrated. This region will have an increased curvature, which has an influence on the final out-of-roundness. At this time, as the operational actual data in the seam gap reduction step, the O-press depression amount, the O-press depression position, and the O-press die R are information necessary for controlling the O-press device, and thus, set values set by the host computer can be used. However, in a case where a measurement device (laser distance meter or the like) that measures the O-press depression amount or the O-press depression position is provided, the measurement result may be used as the operational actual data.

### <Operational parameters of pipe expanding step>

In addition to the operational parameters described above, when the operational parameters of the pipe expanding step are used for the input to the out-of-roundness prediction model, the pipe expansion rate can be used as the operational parameters of the pipe expanding step. Although the greater the pipe expansion rate, the more the out-of-roundness of the steel pipe after the pipe expanding step is improved, the upper limit value of the pipe expansion rate is limited from the viewpoint of the compressive yield strength as a steel pipe product, and therefore, values within the range will be used. At this time, since the pipe expansion rate is information necessary for controlling the pipe expanding device, the pipe expansion rate can use the set value set by a host computer. In addition, the average outer diameter of the entire circumference may be measured by a measuring device such as a shape/dimension meter after pipe expansion is performed, and the average pipe expansion rate calculated by the amount of change from the outer diameter calculated from the width of the steel sheet before processing may be used as the operational actual data. Furthermore, in a case where a pipe expansion rate measurement device is provided in the pipe expanding step, the measurement result may be used as the operational actual data. As the operational parameter of the pipe expanding step, the number of pipe expanding dies and the pipe expanding die diameter may be used in addition to the pipe expansion rate.

### [Method of out-of-roundness prediction after pipe expanding step]

The steel pipe out-of-roundness prediction method after the pipe expanding step using the out-of-roundness prediction model generated as described above is used as follows. That is, by using this method, it is possible to verify whether the manufacturing conditions are appropriate in the individual steps of the steel pipe manufacturing step, specifically, the press bending step of processing the formed body into a U-shaped cross section by a plurality of times of pressing by a punch, the seam gap reduction step of reducing the seam gap portion of the formed body having a U-shaped cross section to form an open pipe, the welding step of joining the ends of the open pipe to each other, and the pipe expanding step of expanding the inner diameter of the steel pipe having the ends joined to each other. The operational conditions of the press bending step and the seam gap reduction step will have complicated influence on the out-of-roundness of the steel pipe after the pipe expanding step, and the variation in the attribute information of the steel sheet in the upstream step has an influence on the result, making it possible to quantitatively evaluate the influence of these factors on the out-of-roundness of the product. This makes it possible to predict variations in out-of-roundness of a steel pipe product based on actual variations in attribute information of a steel sheet to be a material, leading to the capability to change operational conditions of the press bending step and the seam gap reduction step in consideration of such variations in material. That is, even with some variation in the attribute information of the material, the operational conditions of the press bending step and the seam gap reduction step can be optimized in advance so that the out-of-roundness of the steel pipe product falls within a predetermined range.

### <Out-of-roundness control method >

Next, an out-of-roundness control method of the steel pipe after the pipe expanding step using the out-of-roundness prediction model generated as described above will be described. At an intermediate stage of a manufacturing step of a steel pipe manufactured through a large number of steps, the out-of-roundness of the steel pipe after the pipe expanding step is predicted using the operational performance actual data in the step on the upstream side of the present point and using the set value of the operational condition preset in the step on the downstream side, making it possible to determine whether the predicted out-of-roundness of the steel pipe falls within the out-of-roundness allowed as a product. This makes it possible to reconfigure the operational conditions in the step on the downstream side of the present point as necessary. Such an embodiment is illustrated in FIG. 11. As illustrated in FIG. 11, the present embodiment is an exemplary case of the manufacturing step of the steel pipe, in which the actual data regarding the attribute information of the steel sheet to be the material is transferred from the host computer 110, and the out-of-roundness prediction of the steel pipe after the pipe expanding step is performed before the press bending step. At this time, set values of individual steps, including a set value preset as an operational condition of the press bending step, a set value preset as an operational condition of the seam gap reduction step, and a set value preset as an operational condition of the pipe expanding step as necessary, are transferred to an operational condition reconfiguration unit 120. In addition, the actual data of the collected attribute information of the steel sheet and the out-of-roundness target value preset as the target out-of-roundness of the steel pipe after the pipe expanding step are transferred from the host computer 110 to the operational condition reconfiguration unit 120.

Based on these pieces of information, the out-of-roundness prediction model M is used online to predict the out-of-roundness of the steel pipe after the pipe expanding step. Subsequently, the predicted out-of-roundness (out-of-roundness predicted value) is compared with the target out-of-roundness (out-of-roundness target value), and when the predicted out-of-roundness is smaller than the out-of-roundness target value, the steel pipe is manufactured without changing the set values of the operational conditions of the press bending step, the seam gap reduction step, and the pipe expanding step. In contrast, when the predicted out-of-roundness is larger than the out-of-roundness target value, reconfiguration of the operational condition of the press bending step is performed. Specifically, reconfiguration is performed so as to increase the number of times of pressing in the press bending step once or twice or more and shorten the interval between the press depression positions. This improves the out-of-roundness of the steel pipe after the pipe expanding step. Furthermore, the set value of the operational condition of the press bending step reconfigured in this manner may be used again as the input data to the out-of-roundness prediction model to perform out-of-roundness prediction again, a confirmation may be performed whether the predicted out-of-roundness is smaller than the out-of-roundness target value so as to determine the reconfiguration value of the operational condition of the press bending step. Next, the reconfigured operational condition of the press bending step is transferred to the operational condition control unit of the press bending step, and the operational conditions of the press bending step are determined. By repeatedly performing the out-of-roundness determination in the operational condition reconfiguration unit 120 a plurality of times, an appropriate operational condition of the press bending step can be set even when an out-of-roundness target value is set to a strict value, making it possible to manufacture a steel pipe with further improvement in the out-of-roundness.

Note that the operational conditions to be reconfigured as described above are not necessarily limited to the press bending step. The operational conditions of the seam gap reduction step and the operational conditions of the pipe expanding step may be reconfigured, or operational conditions of the plurality of processes may be combined to be reconfigured. In the present embodiment, since the degree of freedom for setting the operational conditions in the seam gap reduction step and the pipe expanding step is lower than in the press bending step, the operational conditions of the press bending step are to be reconfigured. On the other hand, in the manufacturing step of the steel pipe, the actual data of the attribute information of the steel sheet may be transferred to the host computer 110, and it is allowable to perform, after the press bending step, the steel pipe out-of-roundness prediction after the pipe expanding step, at the timing before the seam gap reduction step. At this time, the operational actual data as the operational condition of the press bending step is transferred to the operational condition reconfiguration unit 120, and in addition, the set values of individual steps, including the set value preset as the operational condition of the seam gap reduction step and, in some cases, the set value preset as the operational condition of the pipe expanding step, are also transferred to the operational condition reconfiguration unit 120. Similarly to the above, the actual data of the collected attribute information of the steel sheet and the out-of-roundness target value preset as the target out-of-roundness of the steel pipe after the pipe expanding step are transferred from the host computer 110 to the operational condition reconfiguration unit 120. Furthermore, the out-of-roundness prediction model is used online to predict the out-of-roundness of the steel pipe after the pipe expanding step. The predicted out-of-roundness is compared with the out-of-roundness target value. When the predicted out-of-roundness falls within the out-of-roundness target value, the steel pipe is manufactured without changing the set value of the seam gap reduction step. On the contrary, when the predicted out-of-roundness does not fall within the out-of-roundness target value, the operational condition of the seam gap reduction step is reconfigured. Specifically, a plurality of O-press depression amount conditions are input to the out-of-roundness prediction model created as the seam gap reduction step, and other conditions are set to the O-press depression amount at which the best out-of-roundness can be obtained as constant conditions. In this manner, the reconfigured operational conditions of the seam gap reduction step are transferred to the operational condition control unit of the seam gap reduction step, and the operational conditions of the seam gap reduction step are determined. Furthermore, it is allowable to adopt a method in which the operational conditions of the press bending step are reconfigured by the out-of-roundness control before the press bending step, and the seam gap reduction step is reconfigured after the press bending step by using the actual values of the operational conditions of the press bending step.

As described above, the out-of-roundness control method according to the present embodiment uses the out-of-roundness prediction model that simultaneously considers both variations in the attribute information of the steel sheet and the influence on the out-of-roundness due to the interaction between the press bending step and the seam gap reduction step, making it possible to set an appropriate operational condition for improving the out-of-roundness of the steel pipe after the pipe expanding step, leading to achievement of manufacture of a steel pipe having satisfactory out-of-roundness.

Next, with reference to Table 1 and FIG. 15, an out-of-roundness control method according to an embodiment of the present invention, which is an out-of-roundness control method for a case including an end bending step of a steel sheet prior to a press bending step, will be described.

In the present embodiment, first, a reconfiguration target step is selected from a plurality of forming processing steps constituting the manufacturing step of the steel pipe. Then, before the start of the reconfiguration target step, the out-of-roundness of the steel pipe after the pipe expanding step is predicted using the out-of-roundness prediction model M. Subsequently, reconfiguration is performed on one or more operational parameters selected from at least the operational parameters of the reconfiguration target step or one or more operational parameters selected from the operational parameters of the forming processing step on the downstream side of the reconfiguration target step so as to reduce the out-of-roundness of the steel pipe after the pipe expanding step.

Here, the plurality of forming processing steps constituting the steel pipe manufacturing step refers to the end bending step, the press bending step, the seam gap reduction step, and the pipe expanding step, which are the steps of applying plastic deformation onto the steel sheet to form it into a predetermined shape. For the reconfiguration target step, a certain step is selected from these forming processing steps. Before execution of the forming processing in the selected reconfiguration target step, the out-of-roundness of the steel pipe after the pipe expanding step is predicted using the out-of-roundness prediction model M for the steel pipe. At this time, the forming of the steel sheet has been completed in the forming step on the upstream side of the reconfiguration target step, and thus, when the operational parameters of the forming processing step on the upstream side are to be used, the actual data on operational parameters can be used for the input to the out-of-roundness prediction model M. In contrast, the operational actual data cannot be collected in the downstream forming processing steps including the reconfiguration target step, and thus, the set value preset in the host computer or the like is used for the input to the out-of-roundness prediction model M for the steel pipe. In this manner, the out-of-roundness of the steel pipe after the pipe expanding step for the target material can be predicted.

Subsequently, determination is made as to whether the out-of-roundness predicted as the out-of-roundness of the steel pipe after the pipe expanding step falls within the out-of-roundness allowed as a product. With this operation, when making the out-of-roundness of the steel pipe after the pipe expanding step smaller than the predicted value, it is possible to reconfigure the operational conditions in the reconfiguration target step and the forming processing step on the downstream side of the reconfiguration target step. Here, the operational parameter to be reconfigured may be an operational parameter in the reconfiguration target step or an operational parameter in the forming processing steps downstream of the reconfiguration target step. An operational parameter of the forming processing step suitable for changing the out-of-roundness of the steel pipe after the pipe expanding step will preferably be selected according to a difference between the predicted out-of-roundness and the out-of-roundness allowed as a product. In addition, it is allowable to reconfigure both the operational parameters in the reconfiguration target step and the operational parameters in a certain forming processing step downstream of the reconfiguration target step. This is because the out-of-roundness of the steel pipe after the pipe expanding step can be effectively changed when there is a large difference between the predicted out-of-roundness and the out-of-roundness allowed as a product.

Table 1 specifically illustrates a case of the forming processing step selected as the reconfiguration target step and the forming processing step in which the operational parameters can be reconfigured correspondingly. Case 1 selects the end bending step as the reconfiguration target step in the steel pipe manufacturing step including the end bending step. At this time, before the start of the end bending step, the out-of-roundness of the steel pipe after the pipe expanding step is predicted using the set values of the operational parameters in the forming processing step including the press bending step and the seam gap reduction step. When the predicted out-of-roundness is large, it is possible to reconfigure an arbitrary operational parameter in each forming processing step of the end bending step, the press bending step, the seam gap reduction step, and the pipe expanding step. The operational parameters to be reconfigured are not limited to the operational parameters of the end bending step and may also be the operational parameters of other forming processing steps. When the attribute information of the steel sheet is included as the input to the out-of-roundness prediction model M, the actual data including the measured value and the like related to the attribute information of the steel sheet can be used for the input before starting the end bending step being the reconfiguration target step.

In cases 2 and 3, it is possible to select the reconfiguration target step and the operational parameters to be reconfigured according to the concept similar to case 1. Case 4 is a case where the pipe expanding step is set as the reconfiguration target step. At this time, before the start of the pipe expanding step, the out-of-roundness of the steel pipe after the pipe expanding step is predicted using the out-of-roundness prediction model M. In this case, at least operational actual data in the press bending step and the seam gap reduction step can be used for the input to the out-of-roundness prediction model M. In addition, it is also allowable to use actual data of the attribute information of the steel sheet or operational actual data in the end bending step. In this manner, the predicted out-of-roundness of the steel pipe after the pipe expanding step is compared with the out-of-roundness allowed as a product, and when reducing the out-of-roundness, the operational parameter in the pipe expanding step is reconfigured. It is preferable to use the pipe expansion rate as the operational parameter of the pipe expanding step to be reconfigured. Note that the amount of change from the initially set value of the pipe expansion rate to be reconfigured may be set based on findings from experience. However, when the input of the out-of-roundness prediction model M includes the pipe expansion rate of the pipe expanding step, the out-of-roundness of the steel pipe after the pipe expanding step may be predicted again using the reset value of the pipe expansion rate as the input to the out-of-roundness prediction model M, and the appropriateness of the conditions for reconfiguration may be determined.

**Table 1**

| Case | Reconfiguration | End | Press | Seam gap | Pipe |
|---|---|---|---|---|---|
| | target step | bending step | bending step | reduction step | extending step |
| 1 | End bending step | ○ | ○ | ○ | ○ |
| 2 | Press bending step | - | ○ | ○ | ○ |
| 3 | Seam gap reduction step | - | - | ○ | ○ |
| 4 | Pipe extending step | - | - | - | ○ |

| | | | | | |
|---|---|---|---|---|---|
| ○:Forming processing step for which operational parameter is reconfigurable | | | | | |

Here, the steel pipe out-of-roundness control method according to an embodiment of the present invention will be described with reference to FIG. 15. The example illustrated in FIG. 15 is a case where the seam gap reduction step was selected as the reconfiguration target step, the press bending step was completed, and a U-shaped formed body was transferred for the seam gap reduction step. At this time, the operational actual data in the press bending step is transferred to the operational condition reconfiguration unit 120. The operational actual data may be transferred from a control computer provided in each step of controlling each forming processing step via a network. However, the data may be once transferred from the control computer of each forming processing step to the host computer 110 that performs overall control of the steel pipe manufacturing step, and then transferred from the host computer 110 to the operational condition reconfiguration unit 120. In addition, the actual data regarding the attribute information of the steel sheet is transferred from the host computer 110 to the operational condition reconfiguration unit 120 as necessary. Furthermore, operational actual data in the end bending step may also be transferred as necessary. The set values of the operational parameters of the seam gap reduction step and the pipe expanding step, which are forming processing steps downstream of the reconfiguration target step and the reconfiguration target step, are transferred from the control computer for each step to the operational condition reconfiguration unit 120. However, when the set values of the operational parameters in the seam gap reduction step and the pipe expanding step are stored in the host computer 110, the set values may be transferred from the host computer 110 to the operational condition reconfiguration unit 120. Note that the out-of-roundness target value determined according to the specification of the steel pipe as a product is transferred from the host computer 110 to the operational condition reconfiguration unit 120.

The operational condition reconfiguration unit 120 predicts the out-of-roundness of the steel pipe after the pipe expanding step from these pieces of information using the out-of-roundness prediction model M online, and compares the predicted out-of-roundness (out-of-roundness predicted value) with the target out-of-roundness (out-of-roundness target value). When the out-of-roundness predicted value is smaller than the out-of-roundness target value, the operational condition reconfiguration unit 120 determines the operational conditions of the remaining forming processing steps without changing the set values of the operational conditions of the press bending step, the seam gap reduction step, and the pipe expanding step, and manufactures the steel pipe. On the contrary, when the predicted out-of-roundness is larger than the out-of-roundness target value, the operational condition reconfiguration unit 120 reconfigures at least the operational condition of the seam gap reduction step or the operational condition of the pipe expanding step. Specifically, the O-press depression amount and the like in the seam gap reduction step can be reconfigured. In addition, the pipe expansion rate in the pipe expanding step can be reconfigured. Furthermore, both the O-press depression amount and the pipe expansion rate can be reconfigured.

The operational condition reconfiguration unit 120 may perform the out-of-roundness prediction again using the operational parameters reconfigured in this manner as the input data to the out-of-roundness prediction model M, confirm whether the predicted out-of-roundness is smaller than the out-of-roundness target value, and determine the reconfigured value of the operational conditions of the seam gap reduction step and the pipe expanding step. The reconfigured operational conditions of the seam gap reduction step and the pipe expanding step are transferred to the individual control computers, so as to be the operational conditions of the seam gap reduction step and the pipe expanding step. By repeatedly performing the out-of-roundness determination in the operational condition reconfiguration unit 120 a plurality of times, an appropriate operational conditions of the seam gap reduction step and the pipe expanding step can be set even when a strict out-of-roundness target value is set, making it possible to manufacture a steel pipe with further improvement in the out-of-roundness. Furthermore, it is also allowable to perform processes in which the out-of-roundness control of the steel pipe after the pipe expanding step having the seam gap reduction step defined as the reconfiguration target step is executed in this manner, the out-of-roundness control of the steel pipe after the pipe expanding step having the pipe expanding step defined as the reconfiguration target step is executed again for the steel pipe formed and welded to the open pipe. This is because the steel pipe out-of-roundness prediction accuracy is further improved due to the state where the operational actual data of the seam gap reduction step has been obtained.

As described above, the steel pipe out-of-roundness control method according to an embodiment of the present invention uses the out-of-roundness prediction model M that takes the influence on the out-of-roundness due to the interaction between the press bending step and the seam gap reduction step into consideration, making possible to set an appropriate operational condition for improving the out-of-roundness of the steel pipe after the pipe expanding step, leading to achievement of manufacture of a steel pipe having satisfactory out-of-roundness. In addition, it is possible to realize highly accurate out-of-roundness control reflecting variation in attribute information of a steel sheet to be a material.

### <Steel pipe out-of-roundness prediction device >

Next, a steel pipe out-of-roundness prediction device according to an embodiment of the present invention will be described with reference to FIG. 16.

FIG. 16 is a diagram illustrating a configuration of a steel pipe out-of-roundness prediction device according to an embodiment of the present invention. As illustrated in FIG. 16, a steel pipe out-of-roundness prediction device 160 according to an embodiment of the present invention includes an operational parameter acquisition unit 161, a storage unit 162, an out-of-roundness prediction unit 163, and an output unit 164.

The operational parameter acquisition unit 161 includes a certain interface capable of acquiring the out-of-roundness prediction model M generated by the machine learning unit from the out-of-roundness prediction model generation unit 100, for example. For example, the operational parameter acquisition unit 161 preferably includes a communication interface for acquiring the out-of-roundness prediction model M from the out-of-roundness prediction model generation unit 100. In this case, the operational parameter acquisition unit 161 may receive the out-of-roundness prediction model M from a machine learning unit 100b using a predetermined communication protocol. In addition, the operational parameter acquisition unit 161 acquires operational conditions for a forming processing facility (facility for executing the forming processing step) from a control computer or a host computer installed in the facility used in each forming processing step. For example, the operational parameter acquisition unit 161 preferably includes a communication interface for acquiring operational conditions. In addition, the operational parameter acquisition unit 161 may acquire input information based on a user's operation. In this case, the steel pipe out-of-roundness prediction device 160 further includes an input unit including one or more input interfaces that detect a user input and acquire input information based on the user's operation. Examples of the input unit include, but are not limited to, a physical key, a capacitive key, a touch screen integrated with a display of the output unit, a microphone for voice input, and the like. For example, the input unit receives an input of the operational condition to the out-of-roundness prediction model M acquired from the out-of-roundness prediction model generation unit 100 by the operational parameter acquisition unit 161.

The storage unit 162 includes at least one semiconductor memory device, at least one magnetic memory device, at least one optical memory device, or a combination of at least two of these. The storage unit 162 functions as, for example, a main storage device, an auxiliary storage device, or cache memory. The storage unit 162 stores any kind of information used for the operation of the steel pipe out-of-roundness prediction device 160. The storage unit 162 stores, for example, the out-of-roundness prediction model M acquired from the out-of-roundness prediction model generation unit 100 by the operational parameter acquisition unit 161, the operational condition acquired from the host computer by the operational parameter acquisition unit 161, and the out-of-roundness information predicted by the steel pipe out-of-roundness prediction device 160. The storage unit 162 may store a system program, an application program, and the like.

The out-of-roundness prediction unit 163 includes one or more processors. In the present embodiment, the processor includes, but not limited to, a general-purpose processor or a dedicated processor specialized for specific processing. The out-of-roundness prediction unit 163 is communicably connected to individual components constituting the steel pipe out-of-roundness prediction device 160, and controls the operation of the entire steel pipe out-of-roundness prediction device 160. The out-of-roundness prediction unit 163 may be any general-purpose electronic device such as a personal computer (PC) or a smartphone. The out-of-roundness prediction unit 163 is not limited thereto, and may be one server device or a plurality of server devices capable of communicating with each other, or may be another electronic device dedicated to the steel pipe out-of-roundness prediction device 160. The out-of-roundness prediction unit 163 calculates a predicted value of the steel pipe out-of-roundness information using the operational conditions acquired through the operational parameter acquisition unit 161 and the out-of-roundness prediction model M acquired from the out-of-roundness prediction model generation unit 100.

The output unit 164 outputs the predicted value of the out-of-roundness information of the steel pipe calculated by the out-of-roundness prediction unit 163 to a device for setting the operational conditions of the forming processing facility. The output unit 164 may include one or more output interfaces that output information and notify the user. The output interface is a display, for example. Examples of the display include an LCD or an organic EL display. The output unit 164 outputs data obtained by the operation of the steel pipe out-of-roundness prediction device 160. The output unit 164 may be connected to the steel pipe out-of-roundness prediction device 160 as an external output device instead of being provided in the steel pipe out-of-roundness prediction device 160. As the connection method, for example, any method such as USB, HDMI (registered trademark), or Bluetooth (registered trademark) can be used. Examples of the output unit 164 include, but are not limited to, a display that outputs information by video, a speaker that outputs information by audio, and the like. For example, the output unit 164 presents the predicted value of the out-of-roundness information calculated by the out-of-roundness prediction unit 163 to the user. The user can appropriately set the operational conditions of the forming processing facility based on the predicted value of the out-of-roundness presented by the output unit 164.

A more preferable form of the steel pipe out-of-roundness prediction device 160 after the pipe expanding step as described above is a terminal device such as a tablet terminal including: an input unit 165 that acquires input information based on a user's operation; and a display unit 166 that displays a predicted value of the out-of-roundness information calculated by the out-of-roundness prediction unit 163. This type of device has a function of acquiring input information based on a user's operation from the input unit 165, and updating a part or all of the operational parameters of the forming processing facility already input to the steel pipe out-of-roundness prediction device 160, by using the acquired input information. That is, when the out-of-roundness information of the steel pipe has been predicted by the out-of-roundness prediction unit 163 for the steel sheet being processed in the forming processing facility, it is possible to provide a function of receiving an operation, made by an operator using the terminal device, of performing correction of a part of the operational parameters of the forming processing facility already input to the operational parameter acquisition unit 161. At this time, the operational parameter acquisition unit 161 holds the initial input data for the operational parameters to which the correction input has not been made from the terminal device among the operational parameters of the forming processing facility, and changes only the operational parameter to which the correction input has been made. With this configuration, new input data to the out-of-roundness prediction model M is generated in the operational parameter acquisition unit 161, and a predicted value of the out-of-roundness information based on the input data is calculated by the out-of-roundness prediction unit 163. Furthermore, the calculated predicted value of the out-of-roundness information is displayed on the display unit 166 of the terminal device through the output unit 164. With this procedure, the person such as an operator of the forming processing facility and a factory manager can immediately confirm the predicted value of the out-of-roundness information when the operational parameter of the forming processing facility has been changed, and can promptly change the operational condition to an appropriate operational condition.

### [Examples]

The present Example used a line pipe steel sheet (API grade X60) having a sheet thickness of 38.0 mm to 38.4 mm and a sheet width of 2700 mm to 2720 mm, and manufactured a steel pipe having a diameter of 36 inches after a pipe expanding step through a press bending step, a seam gap reduction step, a welding step, and a pipe expanding step. In the manufacturing, operational conditions of the press bending step and the seam gap reduction step were flexibly changed (finely adjusted) to obtain steel pipes having various out-of-roundness. The actual data of the attribute information of the steel sheet was provided as an average sheet thickness within a plane of the steel sheet as the representative sheet thickness and in addition, as test data of the yield stress obtained in the inspection step of the thick sheet rolling step. In the press bending step, the number of times of pressing was fixed at nine, and the press position was set at a 224 mm pitch in the width direction of the steel sheet with a position 1120 mm away from the central portion in the width direction of the steel sheet defined as a first press position. At that time, fine adjustment (range of 55.0 mm to 60.0 mm) was performed for each steel sheet based on a press depression amount of 15.8 mm at each position.

Along with this setting, for the seam gap reduction step, while a formed body having a U-shaped cross section was held in a U-shaped posture with an open portion facing upward using an O-press device, and using an upper die having an arc surface with a radius R of 457.2 mm and a central angle θc of 60° and having a flat surface connected to the arc surface at an angle θd of 30° and using a lower die having a concave arc surface with a radius R of 502.9 mm, operational conditions were flexibly set (finely adjusted) in a range in which the distance between the R portion apexes (R portion apex is the uppermost portion of the arc surface for the upper die and the lowermost portion of the arc surface for the lower die) of the die with respect to the outer diameter was 1.0 to 3.0%. The out-of-roundness prediction model was generated when 100 pieces of the actual data obtained as described above were accumulated in the database.

The out-of-roundness prediction model generated in this manner was installed on the system illustrated in FIG. 11 as an online model. As a steel pipe out-of-roundness control method, the press bending step was determined as a reconfiguration target step. At this time, the target value regarding the out-of-roundness of the steel pipe set to 10 mm, and the out-of-roundness of the steel pipe after the pipe expanding step was predicted before the reconfiguration target step. When the predicted out-of-roundness is larger than the out-of-roundness target value, the reconfiguration is performed so as to increase the number of times of pressing in the press bending step. As a result, in comparison with the average out-of-roundness value 11.2 mm of in manufacturing ten pipes with an acceptance rate 80% in the known technology, it was verified that, according to the example of the present invention, the average value was reduced to 6.0 mm with an acceptance rate 90%.

### Industrial Applicability

According to the present invention, it is possible to provide a steel pipe out-of-roundness prediction method and a steel pipe out-of-roundness prediction device capable of accurately predicting the out-of-roundness of the steel pipe after the pipe expanding step in the manufacturing step of the steel pipe including a plurality of steps. In addition, according to the present invention, it is possible to provide a steel pipe out-of-roundness control method capable of accurately controlling the out-of-roundness of the steel pipe after the pipe expanding step in the steel pipe manufacturing step including a plurality of steps. Furthermore, according to the present invention, it is possible to provide a steel pipe manufacturing method capable of manufacturing a steel pipe having a desired out-of-roundness with good yield. Furthermore, according to the present invention, it is possible to provide a steel pipe out-of-roundness prediction model generation method capable of generating an out-of-roundness prediction model that accurately predicts the out-of-roundness of a steel pipe after a pipe expanding step in a steel pipe manufacturing step including a plurality of steps.

### Reference Signs List

1 DIE
1a, 1b ROD-SHAPED MEMBER
2 PUNCH
2a PUNCH LEADING END
2b PUNCH SUPPORT
3 UPPER DIE
4 LOWER DIE
10a, 10b LOWER TOOL
11a, 11b SPRING MEANS
12 PUNCH
13 UPPER TOOL
16 PIPE EXPANDING DIE
17 TAPERED OUTER CIRCUMFERENTIAL SURFACE
18 PULL ROD
20 ARM
21a, 21b DISPLACEMENT METER
22 ROTATION ANGLE DETECTOR
25 ROTATING ARM
26a, 26b PRESSING ROLLER
30 C-PRESS DEVICE
31 CONVEYANCE MECHANISM
31a CONVEYANCE ROLL
32A, 32B PRESS MECHANISM
33 UPPER DIE
33a FORMING SURFACE
34 LOWER DIE
34a PRESSING SURFACE
36 HYDRAULIC CYLINDER
37 CLAMP MECHANISM
100 OUT-OF-ROUNDNESS PREDICTION MODEL GENERATION UNIT
100a DATABASE
100b MACHINE LEARNING UNIT
110 HOST COMPUTER
120 OPERATIONAL CONDITION RECONFIGURATION UNIT
160 STEEL PIPE OUT-OF-ROUNDNESS PREDICTION DEVICE
161 OPERATIONAL PARAMETER ACQUISITION UNIT
162 STORAGE UNIT
163 OUT-OF-ROUNDNESS PREDICTION UNIT
164 OUTPUT UNIT
165 INPUT UNIT
166 DISPLAY UNIT
G SEAM GAP PORTION
M OUT-OF-ROUNDNESS PREDICTION MODEL
P STEEL PIPE
R1, R2 REGION
S STEEL SHEET
S₁ FORMED BODY
S₂ OPEN PIPE

## Claims

1. A steel pipe out-of-roundness control method for a steel pipe manufacturing process including: a press bending step of processing a steel sheet (S) into a formed body (S₁) having a U-shaped cross section by a plurality of times of pressing by a punch (2, 12); a seam gap reduction step of reducing a seam gap portion (G) of the formed body (S₁) having a U-shaped cross section to form an open pipe; a welding step of joining ends of the open pipe to each other; and a pipe expanding step of expanding an inner diameter of the steel pipe (P) having ends joined to each other,
the control method **characterized by**
a step of predicting out-of-roundness of a steel pipe (P) after the pipe expanding step by using actual parameters of attribute information of the steel sheet (S) and using a set value of an operational parameter in a downstream step including a press bending step,
the prediction being performed before starting the press bending step by using a steel pipe out-of-roundness prediction method, and
reconfiguring the operational parameter of the press bending step, wherein the out-of-roundness of the steel pipe (P) after the pipe expanding step is reduced,
wherein the steel pipe out-of-roundness prediction method comprises:
a step of predicting the out-of-roundness of the steel pipe (P) after the pipe expanding step by using an out-of-roundness prediction model (M) trained by machine learning, the out-of-roundness prediction model (M) having one or more parameters selected from attribute information of the steel sheet (S), one or more parameters selected from operational parameters of the press bending step, and one or more parameters selected from operational parameters of the seam gap reduction step, as input data, and having steel pipe out-of-roundness information after the pipe expanding step, as output data.

2. A steel pipe out-of-roundness control method according to claim 1, wherein the out-of-roundness prediction model (M) includes one or more operational parameters selected from the operational parameters of the pipe expanding step, as the input data.

3. A steel pipe out-of-roundness control method according to claim 1 or 2, wherein the attribute information of the steel sheet (S) includes one or more parameters out of: yield stress of the steel sheet (S); representative sheet thickness of the steel sheet (S); and sheet thickness distribution information of the steel sheet (S).

4. A steel pipe out-of-roundness control method according to claims 1 to 3, wherein the operational parameter of the press bending step includes: press position information and a press depression amount regarding an operation in which a punch (2, 12) used in the press bending step presses the steel sheet (S); and the number of times of pressing performed through the press bending step.

5. A steel pipe out-of-roundness control method according to claims 1 to 4, wherein the steel pipe manufacturing step includes an end bending step of applying bending to an end of the steel sheet (S) in a width direction prior to the press bending step, and the out-of-roundness prediction model (M) includes one or more parameters selected from the operational parameters of the end bending step, as the input data.

6. A steel pipe out-of-roundness control method according to one of the preceding claims, comprising: a step of predicting out-of-roundness of the steel pipe (P) after the pipe expanding step using actual data of an operational parameter of the press bending step and a set value of an operational parameter in the downstream step including the seam gap reduction step, the prediction performed after completion of the press bending step and before starting the seam gap reduction step by using the steel pipe out-of-roundness prediction method, and reconfiguring the operational parameter of the seam gap reduction step.

7. A steel pipe out-of-roundness control method according to one of the preceding claims, comprising: a step of predicting steel pipe out-of-roundness information after the pipe expanding step, the prediction performed before starting a reconfiguration target step selected from an end bending step, the press bending step, the seam gap reduction step, and the pipe expanding step included in the steel pipe manufacturing step, by using the steel pipe out-of-roundness prediction method, and reconfiguring one or more operational parameters selected from at least operational parameters of the reconfiguration target step or one or more operational parameters selected from operational parameters of a forming processing step on a downstream side of the reconfiguration target step, based on the predicted steel pipe out-of-roundness information.

8. A steel pipe manufacturing method comprising a step of manufacturing a steel pipe (P) using the steel pipe out-of-roundness control method according to any one of claims 1 to 7.

9. A steel pipe out-of-roundness prediction device (160) for predicting an out-of-roundness of a steel pipe (P) after a pipe expanding step, wherein the steel pipe (P) is manufactured in a steel pipe manufacturing process, the manufacturing process includes: a press bending step of processing a steel sheet (S) into a formed body (S₁) having a U-shaped cross section by a plurality of times of pressing by a punch (2, 12); a seam gap reduction step of reducing a seam gap portion (G) of the formed body (S₁) having a U-shaped cross section to form an open pipe; a welding step of joining ends of the open pipe to each other; and the pipe expanding step of expanding an inner diameter of the steel pipe (P) having ends joined to each other, the device **characterized by**
an operational parameter acquisition unit (161) that acquires one or more parameters selected from attribute information of the steel sheet (S), one or more operational parameters selected from operational parameters of the press bending step, and one or more operational parameters selected from operational parameters of the seam gap reduction step;
an out-of-roundness prediction unit (163) that predicts steel pipe out-of-roundness information after the pipe expanding step by inputting the operational parameter acquired by the operational parameter acquisition unit (161) to an out-of-roundness prediction model (M) trained by machine learning, the model having one or more parameters selected from attribute information of the steel sheet (S), one or more operational parameters selected from operational parameters of the press bending step, and one or more operational parameters selected from operational parameters of the seam gap reduction step, as input data, and having steel pipe out-of-roundness information after the pipe expanding step, as output data; and
an operational condition reconfiguration unit (120) that reconfigures the operational parameter of the press bending step so as to reduce the out-of-roundness of the steel pipe (P) after the pipe expanding step.

10. The steel pipe out-of-roundness prediction device (160) according to claim 9, comprising
a terminal device including an input unit (165) that acquires input information based on a user's operation, and a display unit that displays the out-of-roundness information,
wherein the operational parameter acquisition unit (161) updates a part or all of the acquired operational parameters based on the input information acquired by the input unit (165), and
the display unit displays the steel pipe out-of-roundness information predicted by the out-of-roundness prediction unit (163) by using the updated operational parameters.

## Patentansprüche

1. Verfahren zur Kontrolle von Unrundheit von Stahlrohren für einen StahlrohrHerstellungsprozess, welches beinhaltet: einen Pressbiegevorgang des Verarbeitens eines Stahlblechs (S) durch eine Vielzahl von Pressungen mit einem Stempel (2, 12) zu einem geformten Körper (S₁) mit U-förmigem Querschnitt, einen Schritt zum Verringern des Nahtspalts des Verringerns eines Nahtspaltabschnitts (G) des geformten Körpers (S₁) mit einem U-förmigem Querschnitt, um ein offenes Rohr zu bilden, einen Schweißschritt des Verbindens der Enden des offenen Rohrs miteinander und einen Rohraufweitungsschritt des Aufweitens des Innendurchmessers des Stahlrohrs (P), das Enden, die miteinander verbunden sind, aufweist,
wobei das Kontrollverfahren **gekennzeichnet ist durch**
einen Schritt des Vorhersagens der Unrundheit eines Stahlrohrs (P) nach dem Rohraufweitungsschritt **durch** Verwenden tatsächlicher Parameter der Eigenschaftsinformationen des Stahlblechs (S) und Verwenden eines Sollwerts eines Betriebsparameters in einem nachgelagerten Schritt, der einen Pressbiegeschritt beinhaltet,
wobei die Vorhersage vor Beginn des Pressbiegevorgangs unter Verwendung eines Verfahrens zur Vorhersage der Unrundheit eines Stahlrohrs durchgeführt wird, und
eine Neukonfiguration des Betriebsparameters des Pressbiegevorgangs, wobei die Unrundheit des Stahlrohrs (P) nach dem Rohraufweitungsschritt verringert wird,
wobei das Verfahren zur Vorhersage der Unrundheit eines Stahlrohrs umfasst:
einen Schritt des Vorhersagens der Unrundheit des Stahlrohrs (P) nach dem Rohraufweitungsschritt unter Verwendung eines **durch** maschinelles Lernen trainierten Unrundheit-Vorhersagemodells (M), wobei das Unrundheit-Vorhersagemodell (M) einen oder mehrere Parameter, die aus Eigenschaftsinformationen des Stahlblechs (S) ausgewählt sind, einen oder mehrere Parameter, die aus Betriebsparametern des Pressbiegeschritts ausgewählt sind, und einen oder mehrere Parameter, die aus Betriebsparametern des Nahtspaltverringerungsschritts ausgewählt sind, als Eingabedaten aufweist und Informationen zur Unrundheit des Stahlrohrs nach dem Rohraufweitungsschritt als Ausgabedaten aufweist.

2. Verfahren zur Kontrolle der Unrundheit von Stahlrohren gemäß Anspruch 1, wobei das Modell zur Vorhersage der Unrundheit (M) einen oder mehrere Betriebsparameter, die aus den Betriebsparametern des Rohraufweitungsschritts ausgewählt sind, als Eingabedaten beinhaltet.

3. Verfahren zur Kontrolle der Unrundheit von Stahlrohren gemäß Anspruch 1 oder 2, wobei die Eigenschaftsinformationen des Stahlblechs (S) einen oder mehrere Parameter von: Streckgrenze des Stahlblechs (S), repräsentativer Blechdicke des Stahlblechs (S), und Informationen zur Blechdickenverteilung des Stahlblechs (S) beinhalten.

4. Verfahren zur Kontrolle der Unrundheit von Stahlrohren gemäß den Ansprüchen 1 bis 3, wobei der Betriebsparameter des Pressbiegeschritts beinhaltet: Informationen zur Pressposition und zum Presshub in Bezug auf einen Vorgang, bei dem ein im Pressbiegeschritt verwendeter Stempel (2, 12) das Stahlblech (S) presst, und die Anzahl der im Pressbiegeschritt durchgeführten Pressvorgänge.

5. Verfahren zur Kontrolle der Unrundheit von Stahlrohren gemäß den Ansprüchen 1 bis 4, wobei der Stahlrohr-Herstellungsschritt einen Endbiegeschritt des Anwendens von Biegen auf ein Ende des Stahlblechs (S) in Breitenrichtung vor dem Pressbiegeschritt beinhaltet, und das Modell zur Vorhersage der Unrundheit (M) einen oder mehrere Parameter, die aus den Betriebsparametern des Endbiegeschritts ausgewählt sind, als Eingabedaten beinhaltet.

6. Verfahren zur Kontrolle der Unrundheit von Stahlrohren gemäß einem der vorstehenden Ansprüche, umfassend: einen Schritt des Vorhersagens der Unrundheit des Stahlrohrs (P) nach dem Rohraufweitungsschritt unter Verwendung von Istdaten eines Betriebsparameters des Pressbiegeschritts und eines Sollwerts eines Betriebsparameters im nachgelagerten Schritt, einschließlich des Nahtspaltverringerungsschritts, wobei die Vorhersage nach Abschluss des Pressbiegeschritts und vor Beginn des Nahtspaltverringerungsschritts unter Verwendung des Verfahrens zur Vorhersage der Unrundheit von Stahlrohren durchgeführt wird, und das Neukonfigurieren des Betriebsparameters des Nahtspaltverringerungsschritts.

7. Verfahren zur Kontrolle der Unrundheit von Stahlrohren gemäß einem der vorstehenden Ansprüche, umfassend: einen Schritt des Vorhersagens von Informationen zur Unrundheit des Stahlrohrs nach dem Rohraufweitungsschritt, wobei die Vorhersage vor dem Starten eines Zielschritts der Neukonfiguration, welcher aus einem Endbiegeschritt, dem Pressbiegeschritt, dem Schritt zur Verringerung des Nahtspalts und dem Rohraufweitungsschritt, welche im Stahlrohr-Herstellungsschritt enthalten sind, ausgewählt sind, unter Verwendung des Verfahrens zur Vorhersage der Unrundheit von Stahlrohren ausgeführt wird, und das Neukonfigurieren eines oder mehrerer Betriebsparameter, die aus mindestens den Betriebsparametern des Zielschritts der Neukonfiguration oder aus einem oder mehreren Betriebsparametern, die aus Betriebsparametern eines Verarbeitungsschritts zum Formen auf einer nachgelagerten Seite des Zielschritts der Neukonfiguration ausgewählt sind, auf der Grundlage der vorhergesagten Informationen zur Unrundheit des Stahlrohrs.

8. Verfahren zur Herstellung von Stahlrohren, welches einen Schritt des Herstellens eines Stahlrohrs (P) umfasst, wobei das Verfahren zur Kontrolle der Unrundheit von Stahlrohren gemäß einem der Ansprüche 1 bis 7 verwendet wird.

9. Vorrichtung (160) zur Vorhersage der Unrundheit eines Stahlrohrs (P) zum Vorhersagen der Unrundheit eines Stahlrohrs (P) nach einem Rohraufweitungsschritt, wobei das Stahlrohr (P) in einem Stahlrohrherstellungsprozess hergestellt wird und der Herstellungsprozess beinhaltet: einen Pressbiegeschritt des Verarbeitens eines Stahlblechs (S) zu einem geformten Körper (S₁) mit U-förmigem Querschnitt durch eine Vielzahl von Pressvorgängen mit einem Stempel (2, 12), einen Nahtspaltverringerungsschritt des Verringerns eines Nahtspaltabschnitts (G) des geformten Körpers (S₁) mit U-förmigem Querschnitt, um ein offenes Rohr zu bilden, einen Schweißschritt des Verbindens der Enden des offenen Rohrs miteinander und den Rohraufweitungsschritt des Aufweitens eines Innendurchmessers des Stahlrohrs (P), dessen Enden miteinander verbunden sind, wobei die Vorrichtung **gekennzeichnet ist durch**
eine Betriebsparameter-Erfassungseinheit (161), die einen oder mehrere Parameter erfasst, die aus Eigenschaftsinformationen des Stahlblechs (S), einem oder mehreren Betriebsparametern, die aus Betriebsparametern des Pressbiegeschritts ausgewählt sind, und einem oder mehreren Betriebsparametern, die aus Betriebsparametern des Nahtspaltverringerungsschritts ausgewählt sind,
eine Vorhersageeinheit (163) für Unrundheit, die Informationen zur Unrundheit des Stahlrohrs nach dem Rohraufweitungsschritt vorhersagt, indem sie den von der Betriebsparameter-Erfassungseinheit (161) erfassten Betriebsparameter in ein **durch** maschinelles Lernen trainiertes Unrundheit-Vorhersagemodell (M) als Eingabedaten einspeist, wobei das Modell einen oder mehrere Parameter aufweist, welche ausgewählt sind aus den Eigenschaftsinformationen des Stahlblechs (S), einen oder mehreren Betriebsparametern, die aus den Betriebsparametern des Pressbiegeschritts ausgewählt sind, und einen oder mehreren Betriebsparametern, die aus den Betriebsparametern des Nahtspaltverringerungsschritts ausgewählt sind, und Informationen zur Unrundheit des Stahlrohrs nach dem Rohraufweitungsschritt als Ausgabedaten aufweist, und
eine Betriebszustands-Neukonfigurationseinheit (120), die den Betriebsparameter des Pressbiegeschritts so neu konfiguriert, dass die Unrundheit des Stahlrohrs (P) nach dem Rohraufweitungsschritt verringert wird.

10. Vorrichtung (160) zur Vorhersage der Unrundheit eines Stahlrohrs gemäß Anspruch 9, umfassend
ein Endgerät, das eine Eingabeeinheit (165), die Eingabeinformationen auf der Grundlage einer Benutzerbedienung erfasst, und eine Anzeigeeinheit, welche die Informationen zur Unrundheit anzeigt, beinhaltet,
wobei die Betriebsparameter-Erfassungseinheit (161) einen Teil oder alle der erfassten Betriebsparameter auf der Grundlage der von der Eingabeeinheit (165) erfassten Eingabeinformationen aktualisiert
und die Anzeigeeinheit die von der Vorhersageeinheit (163) für Unrundheit unter Verwendung der aktualisierten Betriebsparameter vorhergesagten Informationen zur Unrundheit des Stahlrohrs anzeigt.

## Revendications

1. Procédé de contrôle du défaut de rondeur d'un tube en acier pour un processus de fabrication de tubes en acier, incluant : une étape de cintrage sous presse dans le traitement d'une tôle d'acier (S) en un corps formé (S₁) ayant une section transversale en forme de U par une pluralité de pressions avec un poinçon (2, 12) ; une étape de réduction de l'écartement de jointure consistant à réduire une portion de l'écartement de jointure (G) du corps formé (S₁) ayant une section transversale en forme de U pour former un tube ouvert ; une étape de soudage consistant à joindre entre elles les extrémités du tube ouvert ; et une étape d'élargissement de tube consistant à augmenter le diamètre interne du tube en acier (P) dont les extrémités sont jointes entre elles,
le procédé de contrôle étant **caractérisé par**
une étape de prédiction du défaut de rondeur d'un tube en acier (P) après l'étape d'élargissement de tube en utilisant les paramètres réels d'information d'attribut de la tôle d'acier (S) et en utilisant une valeur de consigne d'un paramètre opérationnel dans une étape en aval incluant une étape de cintrage sous presse,
la prédiction étant effectuée avant le début de l'étape de cintrage sous presse en utilisant un procédé de prédiction du défaut de rondeur d'un tube en acier, et
la reconfiguration du paramètre opérationnel de l'étape de cintrage sous presse, dans lequel le défaut de rondeur du tube en acier (P) après l'étape d'élargissement de tube est réduit,
dans lequel le procédé de prédiction du défaut de rondeur d'un tube en acier comprend :
une étape de prédiction du défaut de rondeur du tube en acier (P) après l'étape d'élargissement de tube en utilisant un modèle de prédiction du défaut de rondeur (M) entraîné par apprentissage automatique, le modèle de prédiction du défaut de rondeur (M) comportant un ou plusieurs paramètres sélectionnés à partir d'information d'attribut de la tôle d'acier (S), un ou plusieurs paramètres sélectionnés parmi les paramètres opérationnels de l'étape de cintrage sous presse, et un ou plusieurs paramètres sélectionnés parmi les paramètres opérationnels de l'étape de réduction de l'écartement de jointure, en tant que données d'entrée, et comportant, en tant que données de sortie, de l'information de défaut de rondeur du tube en acier après l'étape d'élargissement de tube.

2. Procédé de contrôle du défaut de rondeur d'un tube en acier selon la revendication 1, dans lequel le modèle de prédiction du défaut de rondeur (M) inclut comme données d'entrée un ou plusieurs paramètres opérationnels sélectionnés parmi les paramètres opérationnels de l'étape d'élargissement de tube.

3. Procédé de contrôle du défaut de rondeur d'un tube en acier selon la revendication 1 ou 2, dans lequel l'information d'attribut de la tôle d'acier (S) inclut un ou plusieurs paramètres parmi : la limite d'élasticité de la tôle d'acier (S) ; l'épaisseur de tôle représentative de la tôle d'acier (S) ; et l'information de distribution d'épaisseur de tôle de la tôle d'acier (S).

4. Procédé de contrôle du défaut de rondeur d'un tube en acier selon les revendications 1 à 3, dans lequel le paramètre opérationnel de l'étape de cintrage sous presse inclut : de l'information sur la position de la presse et sur la quantité de dépression de la presse concernant une opération dans laquelle un poinçon (2, 12), utilisé à l'étape de cintrage sous presse, presse la tôle d'acier (S) ; et le nombre de pressions appliquées lors de l'étape de cintrage sous presse.

5. Procédé de contrôle du défaut de rondeur d'un tube en acier selon les revendications 1 à 4, dans lequel l'étape de fabrication du tube en acier inclut une étape de cintrage d'extrémité consistant à appliquer un cintrage à une extrémité de la tôle d'acier (S) en direction de la largeur avant l'étape de cintrage sous presse, et le modèle de prédiction du défaut de rondeur (M) inclut comme données d'entrée un ou plusieurs paramètres sélectionnés parmi les paramètres opérationnels de l'étape de cintrage d'extrémité.

6. Procédé de contrôle du défaut de rondeur d'un tube en acier selon l'une des revendications précédentes, comprenant : une étape de prédiction du défaut de rondeur du tube en acier (P) après l'étape d'élargissement de tube en utilisant les données réelles d'un paramètre opérationnel de l'étape de cintrage sous presse et une valeur de consigne d'un paramètre opérationnel de l'étape en aval incluant l'étape de réduction de l'écartement de jointure, la prédiction étant effectuée après l'achèvement de l'étape de cintrage sous presse et avant le début de l'étape de réduction de l'écartement de jointure en utilisant le procédé de prédiction du défaut de rondeur d'un tube en acier et en reconfigurant le paramètre opérationnel de l'étape de réduction de l'écartement de jointure.

7. Procédé de contrôle du défaut de rondeur d'un tube en acier selon l'une des revendications précédentes, comprenant : une étape de prédiction d'information de défaut de rondeur d'un tube en acier après l'étape d'élargissement de tube, la prédiction étant effectuée avant de démarrer une étape cible de reconfiguration sélectionnée parmi une étape de cintrage d'extrémité, l'étape de cintrage sous presse, l'étape de réduction de l'écartement de jointure et l'étape d'élargissement de tube incluse à l'étape de fabrication du tube en acier, en utilisant le procédé de prédiction du défaut de rondeur d'un tube en acier, et de reconfiguration d'un ou plusieurs paramètres opérationnels sélectionnés parmi au moins les paramètres opérationnels de l'étape cible de reconfiguration ou d'un ou plusieurs paramètres opérationnels sélectionnés parmi les paramètres opérationnels d'une étape de traitement de formage en aval de l'étape cible de reconfiguration, sur la base de l'information de défaut de rondeur d'un tube en acier prédite.

8. Procédé de fabrication d'un tube en acier comprenant une étape de fabrication d'un tube en acier (P) utilisant le procédé de contrôle du défaut de rondeur d'un tube en acier selon l'une quelconque des revendications 1 à 7.

9. Dispositif de prédiction du défaut de rondeur d'un tube en acier (160) pour prédire un défaut de rondeur d'un tube en acier (P) après une étape d'élargissement de tube, dans lequel le tube en acier (P) est fabriqué selon un procédé de fabrication d'un tube en acier, le processus de fabrication incluant : une étape de cintrage sous presse dans le traitement d'une tôle d'acier (S) en un corps formé (S₁) ayant une section transversale en forme de U par une pluralité de pressions avec un poinçon (2, 12) ; une étape de réduction de l'écartement de jointure consistant à réduire une portion de l'écartement de jointure (G) du corps formé (S₁) ayant une section transversale en forme de U pour former un tube ouvert ; une étape de soudage consistant à joindre entre elles les extrémités du tube ouvert ; et l'étape d'élargissement de tube consistant à élargir le diamètre interne du tube en acier (P) dont les extrémités sont jointes entre elles,
le dispositif étant **caractérisé par**
une unité d'acquisition de paramètres opérationnels (161) qui acquiert un ou plusieurs paramètres sélectionnés parmi de l'information d'attribut de la tôle d'acier (S), un ou plusieurs paramètres opérationnels sélectionnés parmi les paramètres opérationnels de l'étape de cintrage sous presse, et un ou plusieurs paramètres opérationnels sélectionnés parmi les paramètres opérationnels de l'étape de réduction de l'écartement de jointure ;
une unité de prédiction du défaut de rondeur (163) qui prédit l'information de défaut de rondeur d'un tube en acier après l'étape d'élargissement de tube en entrant le paramètre opérationnel acquis par l'unité d'acquisition de paramètres opérationnels (161) dans un modèle de prédiction du défaut de rondeur (M) entraîné par apprentissage automatique, le modèle ayant un ou plusieurs paramètres sélectionnés parmi l'information d'attribut de la tôle d'acier (S), un ou plusieurs paramètres opérationnels sélectionnés parmi les paramètres opérationnels de l'étape de cintrage sous presse, et un ou plusieurs paramètres opérationnels sélectionnés parmi les paramètres opérationnels de l'étape de réduction de l'écartement de jointure, en tant que données d'entrée, et ayant, en tant que données de sortie, de l'information de défaut de rondeur d'un tube en acier après l'étape d'élargissement de tube ; et
une unité de reconfiguration de condition opérationnelle (120) qui reconfigure le paramètre opérationnel de l'étape de cintrage sous presse afin de réduire le défaut de rondeur du tube en acier (P) après l'étape d'élargissement de tube.

10. Dispositif de prédiction du défaut de rondeur d'un tube en acier (160) selon la revendication 9, comprenant un dispositif terminal incluant une unité d'entrée (165) qui acquiert de l'information d'entrée sur la base d'une opération de l'utilisateur, et une unité d'affichage qui affiche l'information de défaut de rondeur,
dans lequel l'unité d'acquisition de paramètres opérationnels (161) met à jour, en tout ou en partie, les paramètres opérationnels acquis sur la base de l'information d'entrée acquise par l'unité d'entrée (165), et
dans lequel l'unité d'affichage affiche l'information de défaut de rondeur d'un tube en acier prédite par l'unité de prédiction du défaut de rondeur (163) en utilisant les paramètres opérationnels mis à jour.
